(19) Europäisches Patentamt
European Patent Office
Office européen des brevets

(11) EP 4 703 986 A1

(12) EUROPEAN PATENT APPLICATION
published in accordance with Art. 153(4) EPC

(43) Date of publication:
04.03.2026 Bulletin 2026/10

(21) Application number: 23935240.4

(22) Date of filing: 24.04.2023

(51) International Patent Classification (IPC):
G06Q 10/06 (2023.01)

(52) Cooperative Patent Classification (CPC):
G06Q 10/06

(86) International application number:
PCT/JP2023/016170

(87) International publication number:
WO 2024/224459 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Hitachi, Ltd.
Tokyo 100-8280 (JP)

(72) Inventors:
• KUDO Yasuyuki
Tokyo 100-8280 (JP)
• KAWAKAMI Kazuya
Tokyo 100-8280 (JP)

(74) Representative: MERH-IP Matias Erny Reichl
Hoffmann
Patentanwälte PartG mbB
Paul-Heyse-Straße 29
80336 München (DE)

(54) DECISION SUPPORT DEVICE, DECISION SUPPORT METHOD, AND DECISION SUPPORT PROGRAM

(57) A decision making support device executes acquisition processing of acquiring a feature value related to a measure to be implemented by a group, a feature value related to an action of the group, and a feature value related to the group, first prediction processing of inputting the feature value related to the measure, the feature value related to the action, and the feature value related to the group, which are acquired by the acquisition processing, to a machine learning model that predicts whether members of the group cooperate with one another to take the action, and outputting a first prediction result of predicting whether the members of the group cooperate with one another to take the action when the feature value related to the action and the feature value related to the group are input according to whether the measure is implemented, and output processing of outputting the first prediction result obtained by the first prediction processing.

[FIG. 6]

EP 4 703 986 A1

**Description**

Technical Field

The present invention relates to a decision making support device, a decision making support method, and a decision making support program for processing information.

Background Art

PTL 1 discloses an organization improvement activity support device that improves continuity of an organization improvement activity even if an expert does not intervene at a site. The organization improvement activity support device includes: a measure appropriateness acquisition unit configured to acquire measure appropriateness that quantitatively indicates appropriateness of a measure implemented by a target organization for a characteristic of the target organization and an improvement theme; a measure agreement acquisition unit configured to acquire a measure agreement that quantitatively indicates a degree of agreement among members of the target organization for the measure; a measure activity acquisition unit configured to acquire a measure activity that quantitatively indicates a degree of implementation of the measure in the target organization; an effect point calculation unit configured to calculate an effect point that quantitatively indicates a degree of an effect of an organization improvement activity in the target organization based on the measure appropriateness, the measure agreement, and the measure activity; and an information presentation unit configured to present information related to an activity status in at least an own organization to a facilitator and/or a member of the target organization based on the effect point.

Citation List

Patent Literature

PTL 1: JP2016-139323A

Summary of Invention

Technical Problem

A measure presented based on a characteristic of an organization is not a specific measure, and it requires manpower to develop the specific measure.
An object of the invention is to automatically present a cooperation rate among members of a group when a measure for promoting an action is implemented in the group.

Solution to Problem

A decision making support device according to a first aspect of the invention disclosed in the present specification includes a processor configured to execute a program, and a storage device configured to store the program. The processor is configured to execute acquisition processing of acquiring a feature value related to a measure to be implemented by a group, a feature value related to an action of the group, and a feature value related to the group, first prediction processing of inputting the feature value related to the measure, the feature value related to the action, and the feature value related to the group, which are acquired by the acquisition processing, to a machine learning model that predicts whether members of the group cooperate with one another to take the action, and outputting a first prediction result of predicting whether the members of the group cooperate with one another to take the action when the feature value related to the action and the feature value related to the group are input according to whether the measure is implemented, and output processing of outputting the first prediction result obtained by the first prediction processing.
A decision making support device according to a second aspect of the invention disclosed in the present specification includes a processor configured to execute a program and a storage device configured to store the program, and the decision making support device can communicate with a plurality of computers. The decision making support device holds master information in which a rank is set for a recommended action for a group for each characteristic of the group. Each of the plurality of computers holds slave information in which a rank is set for a recommended action for the group for each characteristic of the group. The processor is configured to execute reception processing of receiving, from each of the plurality of computers, an implementation result including a specific characteristic of the group, a specific recommended action for the group, and a first score related to the group based on a first answer to a question conducted to each member of the group before a measure to be implemented by the group is implemented, and a second score related to the group based on a second answer to the question conducted to each member after the measure is implemented, calculation processing of calculating a correction value for a rank of the specific recommended action for the group according to the specific characteristic of the group based on the first score and the second score received by the reception processing, correction processing of correcting the rank of the specific recommended action based on the correction value calculated by the calculation processing, and transmission processing of transmitting a correction result obtained by the correction processing to the plurality of computers.

A decision making support device according to a third aspect of the invention disclosed in the present application includes a processor configured to execute a program and a storage device configured to store the program, and the decision making support device can communicate with a plurality of computers. The decision making support device holds master information in which a rank is set for a recommended action for a group for each characteristic of the group. Each of the plurality of computers holds a machine learning master model that predicts whether members of the group cooperate with one another to take an action of the group when a feature value related to the action and a feature value related to the group are input according to whether a measure to be implemented by the group is implemented. Each of the plurality of computers holds a machine learning slave model that predicts whether the members of the group cooperate with one another to take the action when the feature value related to the action and the feature value related to the group are input according to whether the measure is implemented. The processor is configured to execute reception processing of receiving, from each of the plurality of computers, information related to training of the machine learning master model in the machine learning slave model, training processing of training the machine learning master model based on the information related to training received from each of the plurality of computers by the reception processing, and transmission processing of transmitting, to the plurality of computers, a training parameter of the machine learning master model trained by the training processing.

Advantageous Effects of Invention

According to a representative embodiment of the invention, it is possible to automatically present a cooperation rate among members of a group when a measure for promoting an action is implemented in the group. Problems, configurations, and effects other than those described above will be clarified by descriptions of the following embodiments.

Brief Description of Drawings

[FIG. 1] FIG. 1 is a block diagram showing a hardware structure example of a decision making support device.
[FIG. 2] FIG. 2 is a diagram showing an example of a member DB.
[FIG. 3] FIG. 3 is a diagram showing an example of an answer DB.
[FIG. 4] FIG. 4 is a diagram showing an example of a group characteristic table.
[FIG. 5] FIG. 5 is a diagram showing an example of a recommended action table.
[FIG. 6] FIG. 6 is a flowchart showing an example of an information processing procedure executed by the decision making support device.
[FIG. 7] FIG. 7 is a diagram showing an example of a group analysis result of group characteristic analysis processing (step S602).
[FIG. 8] FIG. 8 is a diagram showing an example of a recommended action analysis result.
[FIG. 9] FIG. 9 is a diagram showing an example of a group data input screen.
[FIG. 10] FIG. 10 is a diagram showing an example of promotion measure analysis processing (step S605).
[FIG. 11] FIG. 11 is a diagram showing an example of a first data conversion table in data conversion (step S1001).
[FIG. 12] FIG. 12 is a diagram showing an example of a second data conversion table in the data conversion (step S1001).
[FIG. 13] FIG. 13 is a diagram showing an example of a reference feature value 1011 output by the data conversion (step S1001).
[FIG. 14] FIG. 14 is a diagram showing an example of a measure feature value table.
[FIG. 15] FIG. 15 is a diagram showing an example of addition (step S1002).
[FIG. 16] FIG. 16 is a diagram showing an example of cooperation rate prediction (step S1003).
[FIG. 17] FIG. 17 is a diagram showing an example of an input screen of a promotion measure implementation result.
[FIG. 18] FIG. 18 is a diagram showing an example of a decision making support system.
[FIG. 19] FIG. 19 is a diagram showing an example of a questionnaire implementation result group shown in FIG. 18.
[FIG. 20] FIG. 20 is a diagram showing an example of update data.
[FIG. 21] FIG. 21 is a diagram showing an example of a recommended action master table.
[FIG. 22] FIG. 22 is a diagram showing an update sequence of a recommended action table.

[FIG. 23] FIG. 23 is a diagram showing an example of a promotion measure implementation result group shown in FIG. 18.

[FIG. 24] FIG. 24 is a diagram showing an update sequence of a machine learning model.

Description of Embodiments

[Embodiment 1]

<Hardware Structure Example of Decision Making Support Device>

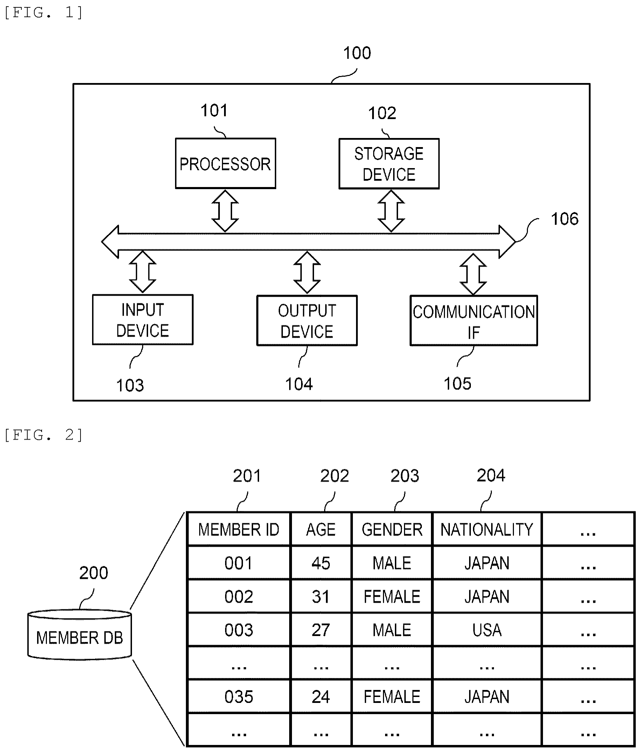

FIG. 1 is a block diagram showing a hardware structure example of a decision making support device. The decision making support device 100 includes a processor 101, a storage device 102, an input device 103, an output device 104, and a communication interface (communication IF) 105. The processor 101, the storage device 102, the input device 103, the output device 104, and the communication IF 105 are connected to one another by a bus 106. The processor 101 controls the decision making support device 100. The storage device 102 is a work area of the processor 101. The storage device 102 is a non-transitory or transitory recording medium that stores various programs or data. Examples of the storage device 102 include a read only memory (ROM), a random access memory (RAM), a hard disk drive (HDD), and a flash memory. The input device 103 inputs data. Examples of the input device 103 include a keyboard, a mouse, a touch panel, a numeric keypad, a scanner, a microphone, and a sensor. The output device 104 outputs data. Examples of the output device 104 include a display, a printer, and a speaker. The communication IF 105 is connected to a network to transmit and receive data.

<Member DB>

FIG. 2 is a diagram showing an example of a member DB. A member DB 200 is a database that stores personal information of members. A member is a person belonging to an organization such as a company, an administrative organization, or a school, or a person (member) who receives a service from the organization. When there are a plurality of members, some kind of decision making is performed in a group configured with the plurality of members.

The member DB 200 includes fields of a member ID 201, age 202, gender 203, and nationality 204. The member DB 200 may include personal information other than the age 202, the gender 203, and the nationality 204. A combination of fields in the same row is an entry for specifying personal information of one member. A value z of xx ID yyy (xx is a character string and yyy is a reference numeral) may be denoted by xx #z. For example, a member having a value "001" of a member ID 201 is denoted as a member #001.

<Answer DB>

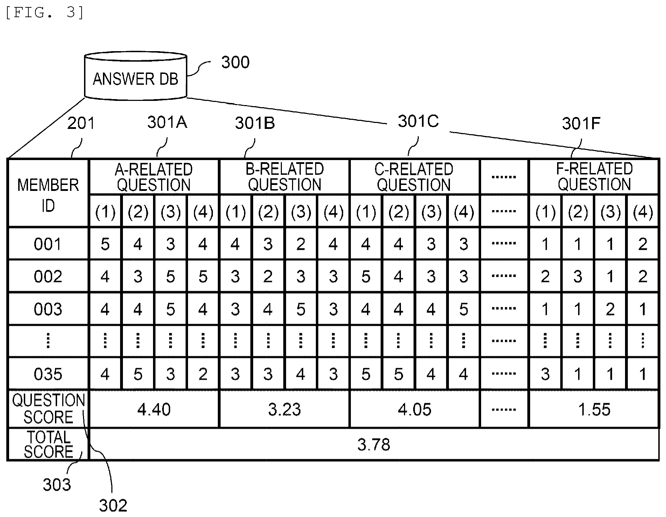

FIG. 3 is a diagram showing an example of an answer DB. An answer DB 300 is a database that stores, for each group, answers to questions included in a questionnaire answered by members belonging to the group. FIG. 3 shows an example of answers to questions from 35 members belonging to a certain group.

The answer DB 300 includes fields of a member ID 201 and an A-related question 301A to an F-related question 301F. When the A-related question 301A to the F-related question 301F are not distinguished from one another, they are referred to as X-related questions 301X. The A-related question 301A is a question related to autonomy. The B-related question 301B is a question related to adaptability. The C-related question 301C is a question related to creativity. The D-related question 301D is a question related to equality. The E-related question 301E is a question related to cooperativeness. The F-related question 301F is a question related to a sense of belonging.

Each of the A-related question 301A to the F-related question 301F includes four questions (1) to (4). The questions (1) to (4) of the X-related question 301X are similar questions, and are intended to improve reliability of answers. For each of the questions (1) to (4), one of options "1" to "5" is selected and scored.

The options "1" to "5" are scores of a 5-case method, and for example, the option "1" is "not applicable at all", the option "2" is "not applicable", the option "3" is "applicable", the option "4" is "very applicable", and the option "5" is "extremely applicable".

For example, although six of the A-related question 301A to the F-related question 301F are shown in FIG. 3, the number of questions is not limited to six. Although the X-related question 301X includes four questions (1) to (4), the number of questions is not limited to four. Further, the options are not limited to the 5-case method. The option may be a response time to an answer.

The answer DB 300 includes a question score 302 of the X-related question 301X. The question score 302 is an average value of $35 \times 4$ scores for the questions (1) to (4) of all the 35 members belonging to the group. For example, in the case of the A-related question 301A, the average value of $35 \times 4$ scores for the questions (1) to (4) of 35 members is "4.40".

The answer DB 300 includes a total score 303. The total score 303 is an average value of $35 \times 4 \times 6$ scores for the questions (1) to (4) of the A-related question 301A to the F-related question 301F of all the 35 members belonging to the group. For example, in the case of the A-related question 301A to the F-related question 301F, the average value of $35 \times 4 \times 6$ scores for the questions (1) to (4) of 35 members is "3.78".

Although an average value is used for the question score 302 and the total score 303, a median value or a statistical value such as an average value excluding an outlier may be used.

<Group Characteristic Table>

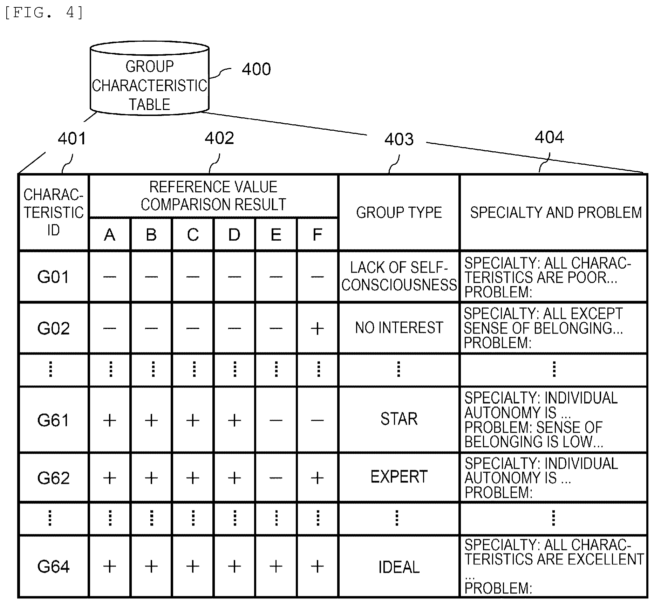

FIG. 4 is a diagram showing an example of a group characteristic table 400. The group characteristic table 400 includes fields of a characteristic ID 401, a reference value comparison result 402, a group type 403, a specialty and problem 404. A combination of values of the fields in the same row is an entry indicating a group characteristic.

The characteristic ID 401 is identification information for uniquely specifying a group characteristic. The reference value comparison result 402 indicates a comparison result between a reference value and the question score 302 of each of the A-related question 301A to the F-related question 301F. In the example of the 5-case method, since a score range is 1 to 5, the question score 302 serving as a reference value is set to "3.00", and "+" is recorded when the score is higher than the reference value, and "-" is recorded when the score is lower than the reference value. The group type 403 is uniquely specified by a combination of "+" and "-" of the A-related question 301A to the F-related question 301F in the reference value comparison result 402.

The group type 403 is a character string indicating a type of the group characteristic. The specialty and problem 404 are character strings indicating a specialty and a problem of a group corresponding to the group type 403.

In FIG. 3, the question score 302 of the A-related question 301A is "4.40", the question score 302 of the B-related question 301B is "3.23", the question score 302 of the C-related question 301C is "4.05" ... and the question score 302 of the F-related question 301F is "1.55". When the question score 302 of the D-related question 301D is higher than the reference value "3.00" and the question score 302 of the E-related question 301E is lower than the reference value "3.00", a group shown in FIG. 3 corresponds to a group characteristic of "G61".

Although there are 64 types of group characteristics in FIG. 4, the group characteristics are not limited to 64 types. Although the reference value comparison result 402 is expressed by 2 values of "+" and "-", the reference value comparison result 402 may be expressed by multiple values based on a difference from the reference value. The question score 302 of each of the A-related question 301A to the F-related question 301F may be used as a vector, a score of the reference value of each of the A-related question 301A to the F-related question 301F may be used as a reference value vector, and the reference value comparison result 402 may be expressed by a distance between two vectors.

Character strings indicated in the group type 403 and the specialty and problem 404 are not limited thereto, and other expressions may be used.

<Recommended Action Table>

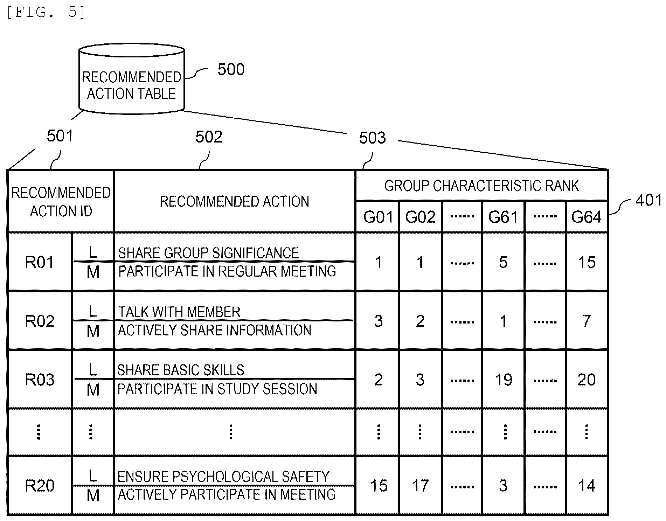

FIG. 5 is a diagram showing an example of a recommended action table. A recommended action table 500 is a table for specifying an action recommended to a group corresponding to a group characteristic. The recommended action table 500 includes a recommended action ID 501, a recommended action 502, and a group characteristic rank 503.

The recommended action ID 501 is identification information for uniquely specifying the recommended action 502. The recommended action 502 includes an action recommended to a leader in the group and an action recommended to a member in the group. "L" is added to the end of the recommended action ID 501 that uniquely specifies the recommended action 502 recommended to a leader, and "M" is added to the end of the recommended action ID 501 that uniquely specifies the recommended action 502 recommended to a member.

The recommended action 502 is a character string indicating an action recommended to the group. The recommended action 502 includes a recommended action 502 recommended to a leader and a recommended action 502 recommended to a member. For example, a recommended action #R01L is "group shared vision", and a recommended action #R01M is "participation in regular meeting".

The group characteristic rank 503 indicates a rank of the recommended action 502 for each group characteristic. In the present embodiment, since 20 recommended actions are defined, the recommended actions 502 are ranked from 1 to 20 for each group characteristic.

Specifically, the member DB 200, the answer DB 300, the group characteristic table 400, and the recommended action table 500 are stored in, for example, the storage device 102, and may be stored in another computer that can be accessed by the communication IF 105 via a network such as the Internet, a local area network (LAN), or a wide area network (WAN).

<Information Processing Procedure>

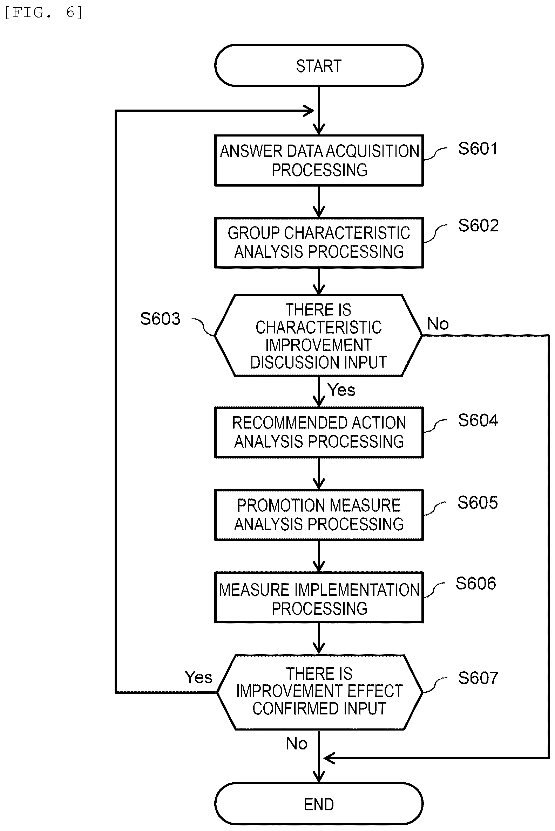

FIG. 6 is a flowchart showing an example of an information processing procedure executed by the decision making support device 100. The decision making support device 100 executes answer data acquisition processing (step S601) and group characteristic analysis processing (step S602).

In the answer data acquisition processing (step S601), the decision making support device 100 reads the question score 302 and the total score 303 from the answer DB 300 as answer data. The decision making support device 100 may read the scores of the questions (1) to (4) of the X-related question 301X for each member from the answer DB 300 and calculate the question score 302 and the total score 303 as answer data.

[Group Characteristic Analysis Processing (Step S602)]

In the group characteristic analysis processing (step S602), the decision making support device 100 analyzes a group characteristic based on the answer data acquired in the answer data acquisition processing (step S601). Specifically, for example, the decision making support device 100 compares the question score 302 with the reference value and specifies the reference value comparison result 402 with reference to the group characteristic table 400. Accordingly, the characteristic ID 401, the group type 403, the specialty and problem 404 of a group (hereinafter, a target group) constituted by members who are answer sources of the answer data (the question score 302) are specified as analysis information.

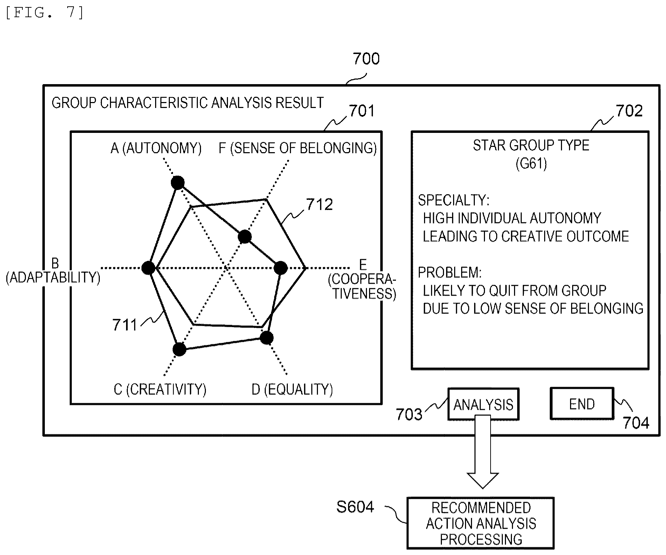

FIG. 7 is a diagram showing an example of a group analysis result of the group characteristic analysis processing (step S602). A group analysis result 700 can be displayed on, for example, a display that is an example of the output device 104. The group analysis result 700 includes a radar chart 701, analysis information 702, an analysis button 703, and an end button 704.

The radar chart 701 is a diagram obtained by visualizing the question scores 302 of the A-related question 301A to the F-related question 301F. A first chart diagram 711 includes six black dots indicating the question scores 302 of the A-related question 301A to the F-related question 301F and lines connecting adjacent black dots. A second chart diagram 722 shows a reference value (for example, the question score: 3.00). The second chart diagram 722 may be a chart diagram of another group.

The analysis information 702 is information obtained by visualizing the characteristic ID 401, the group type 403, and the specialty and problem 404 of the target group.

The analysis button 703 and the end button 704 are user interfaces that can be pressed by a user (for example, a leader of the target group) operating the input device 103. When the analysis button 703 is pressed (step S603: Yes), recommended action analysis processing (step S604) is executed. When the end button 704 is pressed (step S603: No), the series of processing ends.

The group characteristic analysis processing (step S602) may be not implemented based on a rule as described above, and may be implemented by machine learning in which the answer data is set as a feature value and the group type 403 is set as ground truth data.

In FIG. 6, the decision making support device 100 executes the recommended action analysis processing (step S604), promotion measure analysis processing (step S605), and measure implementation processing (step S606).

[Recommended Action Analysis Processing (Step S604)]

In the recommended action analysis processing (step S604), the decision making support device 100 analyzes the recommended action 502. Specifically, for example, the decision making support device 100 acquires the characteristic ID 401 and a character string of a problem in the specialty and problem 404 in the analysis information 702. In addition, the decision making support device 100 acquires, from the recommended action table 500, top N recommended actions 502 in the group characteristic rank 503 among the recommended actions 502 for the group characteristic specified in the group characteristic analysis processing (step S602).

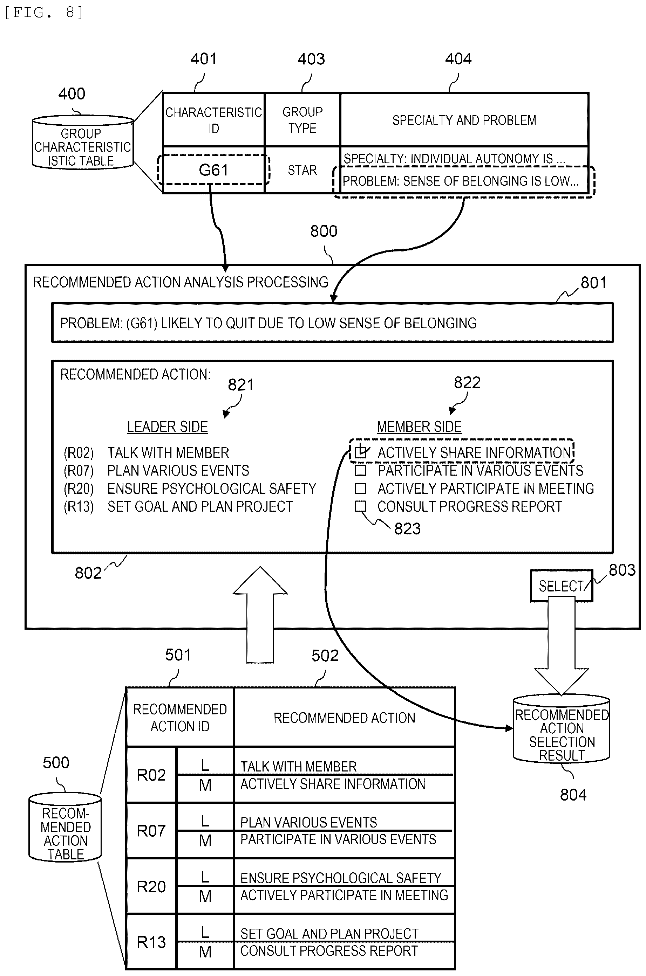

FIG. 8 is a diagram showing an example of a recommended action analysis result. A recommended action analysis result 800 includes a problem display region 801, a top recommended action display region 802, and a select button 803. The recommended action analysis result 800 can be displayed on, for example, a display that is an example of the output device 104.

The problem display region 801 is a region for displaying the characteristic ID 401 and a character string of a problem in the specialty and problem 404 of the target group. In the present embodiment, since the acquired characteristic ID 401 is "G61", "likely to quit due to low sense of belonging" is displayed.

The top recommended action display region 802 is a region for displaying the top N recommended actions 502 in the group characteristic rank 503 acquired from the recommended action table 500. In the present embodiment, N = 4. When the characteristic ID 401 is "G61", the recommended actions 502 of recommended actions #R02 (first), #R07 (second), #R20 (third), and #R13 (fourth) are displayed.

Leader-side recommended actions 821 are recommended actions #R02L, #R07L, #R20L, and #R13L, and member-side recommended actions 822 are recommended actions #R02M, #R07M, #R20M, and #R13M. The member-side recommended actions 822 include check boxes 823. The check boxes 823 are user interfaces that can be selected by a user (for example, a leader of the target group) operating the input device 103.

The select button 803 is a user interface that can be pressed by a user (for example, a leader of the target group) operating the input device 103. When the select button 803 is pressed in a state where one or more member-side recommended actions 822 are selected in the check boxes 823, the decision making support device 100 stores the member-side recommended actions 822 selected in the check boxes 823 as a recommended action selection result 804. In the present embodiment, the recommended action selection result 804 is "active information sharing" (the recommended action ID 501 is R02M).

[Group Data Input Screen]

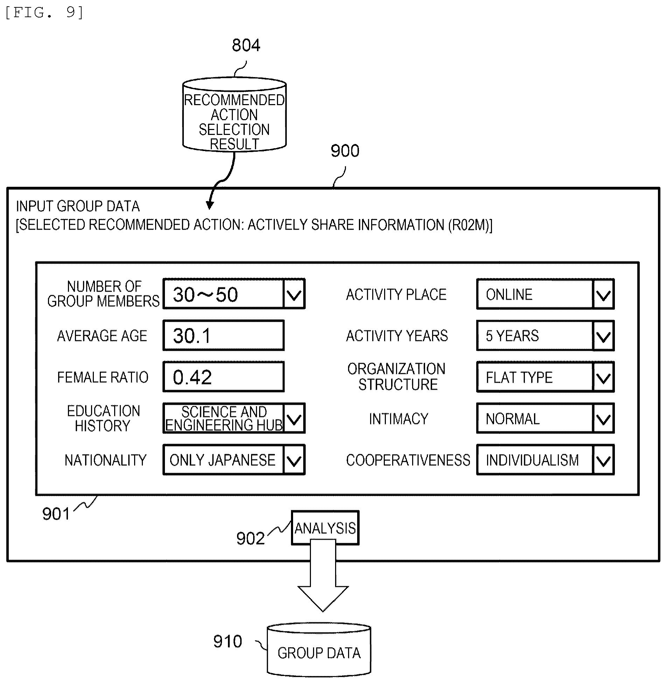

FIG. 9 is a diagram showing an example of a group data input screen. The group data input screen 900 is displayed by pressing the select button 803. The group data input screen 900 displays the recommended action selection result 804 as a selected recommended action. The group data input screen 900 includes a group data input region 901 and an analysis button 902.

The group data input region 901 includes input items related to, for example, the number of group members, average age, a female ratio, education history, nationality, an activity place, activity years, an organization structure, intimacy, and cooperativeness.

The number of group members indicates a range of the number of members of a target group. The decision making support device 100 specifies the number of members of the group from the member DB 200 according to the answer data (the question score 302), specifies a range to which the number of members belongs, and displays the range as the number of group members. The number of group members can also be selected by a user (for example, a leader of a target group) operating the input device 103. In the present embodiment, since the number of members of the group is 35, the number of group members is displayed as "30 to 50".

The average age is an average value of the age 202 of members of the target group. The decision making support device 100 specifies the age 202 of group members from the member DB 200 according to the answer data (the question score 302), calculates the average value of the age 202, and displays the average value as the average age.

The female ratio is a ratio at which the gender 203 indicates female in the target group. The decision making support device 100 specifies, from the member DB 200, the number of members whose gender 203 is female among the group members according to the answer data (the question score 302), and calculates and displays the female ratio by dividing the number of female members by the total number of group members of.

The education history is a rough education history of the target group. The number of group members is selected by a user (for example, a leader of the target group) operating the input device 103.

The nationality is a qualification indicating that members of the target group belong to a specific country and are citizens. The nationality 204 is not the nationality of an individual member, but a nationality distribution of the group as a whole. The decision making support device 100 may read the nationality 204 of each member and select the nationality 204 from a plurality of categories such as "only Japanese" and "including foreigners", or the nationality 204 may be selected by a user (for example, a leader of the target group) operating the input device 103.

The activity place, the activity years, the organization structure, the intimacy, and the cooperativeness are selected by a user (for example, a leader of the target group) operating the input device 103.

The analysis button 902 is a user interface that can be pressed by a user (for example, a leader of the target group) operating the input device 103. When the analysis button 902 is pressed, the input data (the number of group members, the average age, the female ratio, the education history, the nationality, the activity place, the activity years, the organization structure, the intimacy, and the cooperativeness) input to the group data input region 901 is stored as group data 910.

The recommended action analysis processing (step S604) may not be implemented based on a rule described above, and may be implemented by machine learning in which the group type 403 is used as a feature value and the recommended action 502 is used as ground truth data.

[Promotion Measure Analysis Processing (Step S605)]

Returning to FIG. 6, in the promotion measure analysis processing (step S605), the decision making support device 100 analyzes a promotion measure. The promotion measure is a measure to be implemented by the target group in order to promote the selected recommended action of the recommended action selection result 804.

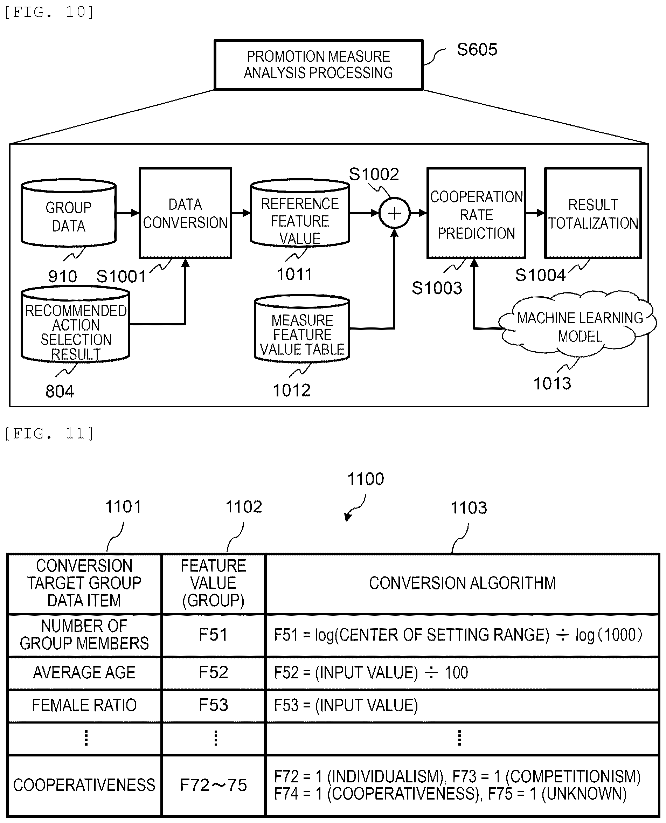

FIG. 10 is a diagram showing an example of the promotion measure analysis processing (step S605). In the promotion measure analysis processing (step S605), the decision making support device 100 performs data conversion on each of the recommended action selection result 804 and the group data 910.

In the promotion measure analysis processing (step S605), the decision making support device 100 inputs the group data 910 and the recommended action selection result 804, executes data conversion (step S1001), and outputs a reference feature value 1011. In addition, the decision making support device 100 executes addition of the reference feature value 1011 and a measure feature table 1012 (step S1002). Then, the decision making support device 100 inputs an addition result in step S1002 to a machine learning model 1013 and executes cooperation rate prediction (step S1003). Thereafter, the decision making support device 100 totalizes a cooperation rate that is a prediction result of the cooperation rate prediction (step S1003) (step S1004). Hereinafter, the data conversion (step S1001), the addition (step S1002), the cooperation rate prediction (step S1003), and the result totalization (step S1004) will be sequentially described.

·Data Conversion (Step S1001)

FIG. 11 is a diagram showing an example of a first data conversion table in the data conversion (step S1001). The first data conversion table 1100 is a table for converting the group data 910 into feature values (groups) F51 to F75. The first data conversion table 1100 defines a conversion target data item 1101, a feature value (group) 1102, and a conversion algorithm 1103.

The conversion target data item 1101 is a data item (the number of group members, the average age, the female ratio, the education history, the nationality, the activity place, the activity years, the organization structure, the intimacy, and the cooperativeness) in the group data 910 to be subject to data conversion in the data conversion (step S1001).

The feature value (group) 1102 is a feature value related to the group, and is an index of the conversion target data item 1101 in the same row. For example, F51 refers to a feature value related to the number of group members. In FIG. 11, there are 25 types (F51 to F25) of feature values (groups) 1102, but the number of types is not limited to 25.

The conversion algorithm 1103 is a function for performing data conversion on a value of the conversion target data item 1101 into the feature value (group) 1102. For example, in the case of F51, since a setting range of the number of group members is "30 to 50", "the center of the setting range" is "40". Therefore, F51 is calculated according to the following formula (1).

$$F51 = \log(\text{center of setting range}) \div \log(1000)$$
$$= \log(40) \div \log(1000)$$
$$= 0.534 \quad (1)$$

Further, for the feature values F72 to F75 (cooperativeness), any one of the feature values F72 to F75 is "1", and the rest is "0". In the example of FIG. 9, since the cooperativeness is set to "individualism", F72 is set to "1", and F73 to F75 are set to "0". As described above, the decision making support device 100 acquires the feature values F51 to F75 related to the group from the group data 910.

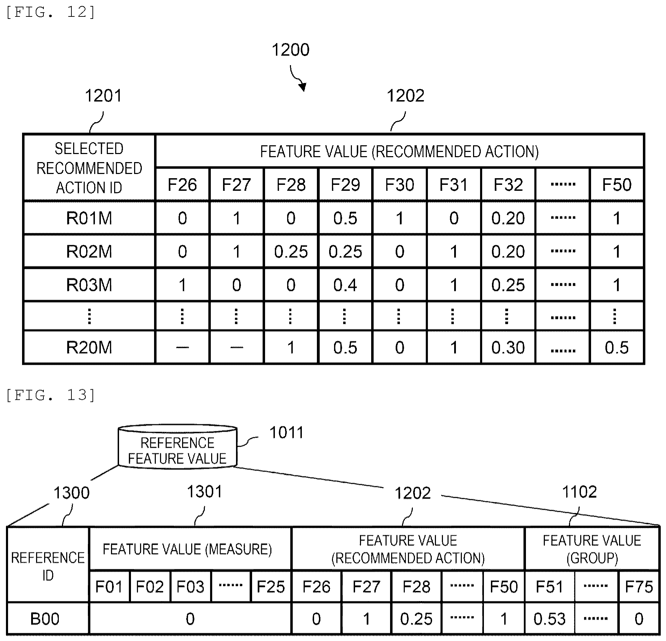

FIG. 12 is a diagram showing an example of a second data conversion table in the data conversion (step S1001). A second data conversion table 1200 is a table for converting the recommended action selection result 804 into a feature value (situation).

The second data conversion table 1200 includes fields of a selected recommended action ID 1201 and feature values (recommended actions) 1202 (F26 to F50). The selected recommended action ID 1201 is specified according to the recommended action selection result 804. The feature values (recommended actions) 1202 include feature values F26 to F50 related to recommended actions. The feature values F26 to F50 have different values for each feature value (recommended action) 1202. In the present embodiment, the recommended action selection result 804 is a value "R02M" in the selected recommended action ID 1201 (see FIGS. 8 and 9). Therefore, the decision making support device 100 acquires the feature values F26 to F50 in the row of "R02M".

In FIG. 12, there are 25 types of feature values (recommended actions) 1202 (F26 to F50), but the number of types is not limited to 25.

FIG. 13 is a diagram showing an example of the reference feature value 1011 output by the data conversion (step S1001). The reference feature value 1011 includes fields of a reference ID 1300, a feature value (measure) 1301, the feature value (recommended action) 1202, and the feature value (group) 1102.

The reference ID 1300 is identification information for uniquely specifying the reference feature value 1011. The feature value (measure) 1301 includes feature values F01 to F25 related to measures. The features F01 to F25 related to measures are set for each measure, while the reference feature value 1011 is set to 0 because the reference feature value 1011 is a reference for all measures.

The feature values F26 to F50 converted using the second data conversion table 1200 of FIG. 12 are set in the feature value (recommended action) 1202. The features F51 to F75 converted using the first data conversion table 1100 of FIG. 11 are set in the feature value (group) 1202.

·Addition (Step S1002)

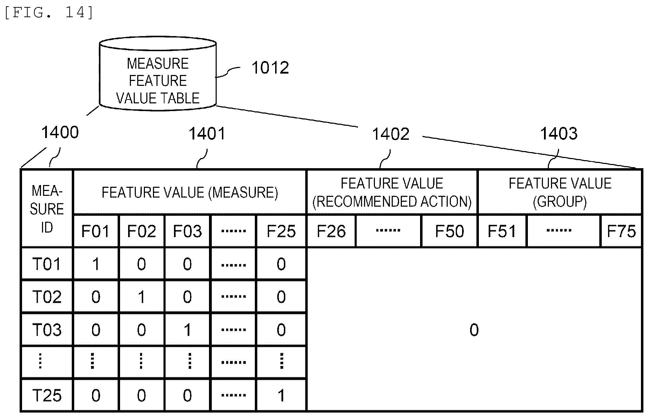

FIG. 14 is a diagram showing an example of the measure feature table 1012. The measure feature table 1012 is a table that defines, for each measure, a feature value related to a measure to be implemented by a group. The measure feature table 1012 includes a measure ID 1400, a feature value (measure) 1401, a feature value (recommended action) 1402, and a feature value (group) 1403.

The measure ID 1400 is identification information for uniquely specifying a measure. In the present embodiment, 25 types of measures (T01 to T25) are defined. In FIG. 14, there are 25 types of measures ID 1400 (T01 to T25), but the number of types is not limited to 25.

The feature value (measure) 1401 is a feature value related to a measure that uniquely characterizes a measure specified by the measure ID 1400. In the present embodiment, a feature value for which a number at the end of the measure ID 1400 matches a number at the end of the feature value (measure) 1401 is set to "1", and a feature for which the numbers do not match is set to "0". For example, when the measure ID 1400 is "T01", a value of the feature value F01 is set to "1", and values of the feature values F2 to F25 are set to "0". That is, the feature value (measure) 1401 is represented by a diagonal matrix in which diagonal components are "1" when viewed from all measures T01 to T25. Although the diagonal matrix is used in the present embodiment, the diagonal matrix may not be used as long as the features F1 to F25 are different for each measure.

In the measure feature table 1012, in order to express the feature value (measure) 1401, the feature value (recommended action) 1402 and the feature value (group) 1403 are set to "0".

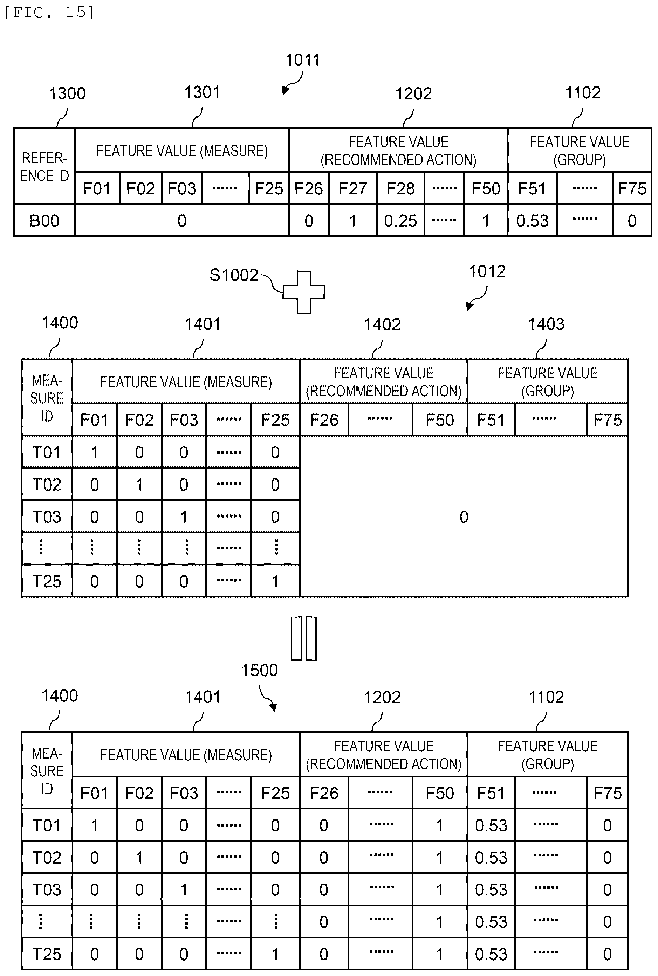

FIG. 15 is a diagram showing an example of the addition (step S1002). In the addition (step S1002), the reference feature value 1011 and the measure feature table 1012 are added. Specifically, for example, the feature value (measure) 1301 and the feature value (measure) 1401 are added, the feature value (recommended action) 1202 and the feature value (recommended action) 1402 are added, and the feature value (group) 1102 and the feature value (group) 1403 are added. Accordingly, the decision making support device 100 acquires an addition result 1500.

The addition result 1500 includes the feature value (measure) 1401, the feature value (recommended action) 1402, and the feature value (group) 1403. That is, the features F1 to F75 in which the feature value (recommended action) 1402 and the feature value (group) 1403 are considered in a measure are shown.

·Cooperation Rate Prediction (Step S1003) and Result Totalization (Step S1004)

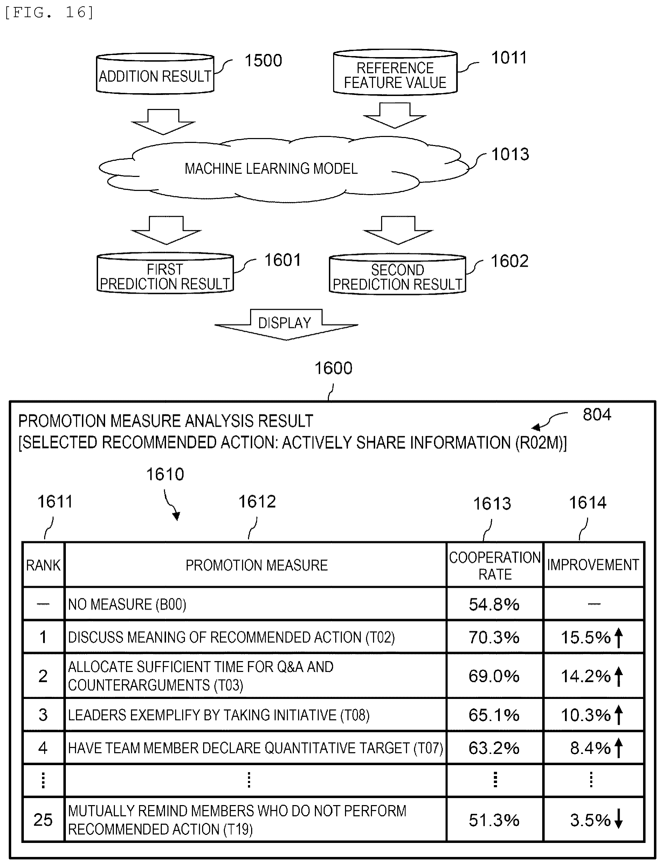

FIG. 16 is a diagram showing an example of the cooperation rate prediction (step S1003). In the cooperation rate prediction (step S1003), the addition result 1500 and the reference feature value 1011 are input to the machine learning model 1013. The machine learning model 1013 outputs a first prediction result 1601 when the addition result 1500 is input, and outputs a second prediction result 1602 when the reference feature value 1011 is input. The first prediction result 1601 is a set of cooperation rates 1613 for each measure. The second prediction result 1602 is the cooperation rate 1613 when a measure is not applied.

The cooperation rate 1613 is a probability for predicting whether members of a target group cooperate with each other to perform the selected recommended action when the target group implements a measure (when the measure is not implemented in the second prediction result 1602). For example, when no measure is implemented in the target group, the cooperation rate 1613 at which the members of the target group cooperate with one another to perform the selected recommended action #R02M "active information sharing" is 54.8%. On the other hand, when the measure #T02 "discuss the meaning of a recommended action", which is a promotion measure 1612 having a rank 1611 of 1, is implemented in the target group, the cooperation rate 1613 at which the members of the target group cooperate with one another to perform the selected recommended action #R02M "active information sharing" is 70.3%.

The machine learning model 1013 is a model trained in advance according to a training data set including sample data (or only the reference feature value 1011) corresponding to the addition result 1500 and ground truth data of the sample data. The ground truth data may be a label indicating "1" when there is cooperation and "0" when there is no cooperation, or may be a probability value of 0 or more and 1 or less.

The decision making support device 100 re-trains the machine learning model 1013 by performing error back propagation using a value of a loss function based on a difference between the cooperation rate 1613 indicated by the first prediction result 1601 and the second prediction result 1602 and an actual cooperation rate (which may be a subjective view of a leader of a group) when a measure is implemented.

In the result totalization (step S1004), the decision making support device 100 displays a promotion measure analysis result screen 1600 based on the first prediction result 1601 and the second prediction result 1602. The promotion measure analysis result screen 1600 includes the recommended action selection result 804 and a promotion measure analysis result 1610.

The promotion measure analysis result 1610 includes fields of the rank 1611, the promotion measure 1612, the cooperation rate 1613, and improvement 1614. The rank 1611 indicates a rank of the promotion measure 1612 sorted in descending order of the cooperation rate 1613 in the second prediction result 1602. The higher the cooperation rate 1613, the higher the rank. Note that the rank 1611 is not set for no measure, that is, the second prediction result 1602.

The promotion measure 1612 is a character string associated with the measure ID 1400. Note that "no measure (B00)" is displayed for no measure, that is, the second prediction result 1602. "B00" is the reference ID 1300.

The cooperation rate 1613 is indicated by the first prediction result 1601 and the second prediction result 1602 output from the machine learning model 1013. The improvement 1614 is an absolute value of a difference obtained by subtracting the cooperation rate 1613 (no measure) of the second prediction result 1602 from the cooperation rate 1613 to which the rank 1611 of the first prediction result 1601 is assigned. If the difference is positive, the absolute value of the difference and an upward arrow are displayed, and if the difference is negative, the absolute value of the difference and an upward arrow are displayed.

Accordingly, for example, when the promotion measure 1612 of the measure #T02 of which the rank 1611 is 1, that is, "discuss the meaning of a recommended action" is applied to the group, the cooperation rate 1613 (a predicted value) is 70.3%, and it is predicted that the cooperation rate increases by 15.5% as compared with the cooperation rate 1613 (54.8%) in the case of no measure.

[Measure Implementation Processing (Step S606)]

Returning to FIG. 6, the decision making support device 100 executes measure implementation processing (step S606). In the measure implementation processing (step S606), the decision making support device 100 receives an input of a result of implementing a promotion measure through an operation of a user (for example, a leader of the target group), and stores the input data in the storage device 102.

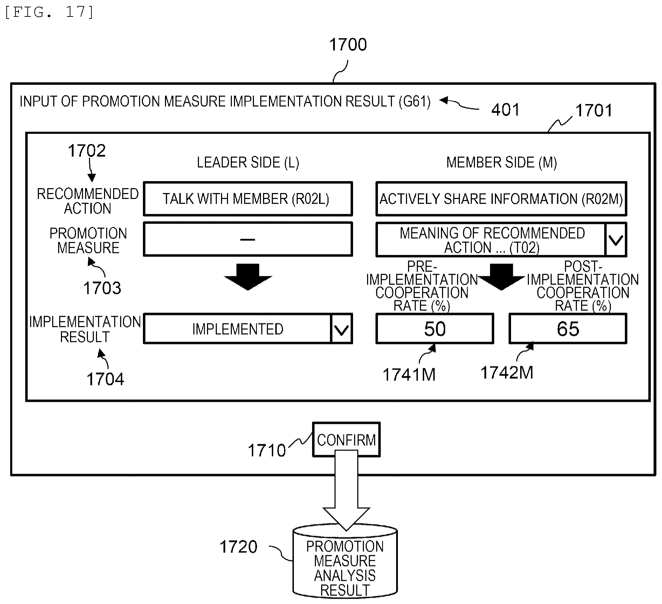

FIG. 17 is a diagram showing an example of an input screen of a promotion measure implementation result. An input screen 1700 of the promotion measure implementation result includes the characteristic ID 401, a promotion measure implementation result 1701, and a confirm button 1710. The characteristic ID 401 indicates a characteristic ID of the target group. In the present embodiment, the characteristic ID 401 is G61.

The promotion measure implementation result 1701 includes a recommended action 1702, a promotion measure 1703, and an implementation result 1704. The recommended action 1702, the promotion measure 1703, and the implementation result 1705 are displayed separately on a leader side (L) and a member side (M). "L" is added to ends of the recommended action 1702, the promotion measure 1703, and the implementation result 1704 on the leader side (L), and "M" is added to ends of the recommended action 1702, the promotion measure 1703, and the implementation result 1704 on the member side (M).

The recommended action 1702L indicates the leader-side recommended action 821 corresponding to the member-side recommended action selection result 804 selected in FIG. 8. In the present embodiment, "conversation with member side" of a recommended action #R02L is displayed as the recommended action 1702L.

The recommended action 1702L indicates a recommended action #R02M which is the member-side recommended action selection result 804 selected in FIG. 8. In the present embodiment, "active information sharing" of the recommended action #R02M is displayed as the recommended action 1702M.

The promotion measure 1703L is not displayed. This is because, in the case of the present embodiment, the group data 910 is generated based on the member-side recommended action selection result 804, and is not generated based on the recommended action 1702L.

The promotion measure 1703M indicates the promotion measure 1612 selected from the promotion measure analysis result 1610. The promotion measure 1703M is, for example, a pull-down user interface that allows a user (for example, a leader of the target group) to select the promotion measure 1612 by operating the input device 103. In the example of FIG. 17, "discuss the meaning of the recommended action" of the measure #T02 is selected. Selection items of the promotion measure 1703M include "not implemented" in addition to the promotion measure 1612.

The implementation result 1704L indicates whether a promotion measure is implemented. The implementation result 1704L is a pull-down user interface that allows a user (for example, a leader of the target group) to select "not implemented" or "implemented" by operating the input device 103. In the example of FIG. 17, "implemented" is selected.

The implementation result 1704M includes a pre-implementation cooperation rate 1741M and a post-implementation cooperation rate 1742M. The pre-implementation cooperation rate 1741M is a cooperation rate before the promotion measure 1612 selected in the promotion measure 1703M is implemented, and is input information input by a user (for example, a leader of the target group) operating the input device 103.

The post-implementation cooperation rate 1742M is a cooperation rate after the promotion measure 1612 selected in the promotion measure 1703M is implemented, and is input information input by a user (for example, a leader of the target group) operating the input device 103. When the promotion measure 1703M is "not implemented", the post-implementation cooperation rate 1742M is automatically set to "not implemented".

The confirm button 1710 is a user interface that can be pressed by a user (for example, a leader of the target group) operating the input device 103. When the confirm button 1710 is pressed, the decision making support device 100 stores the promotion measure implementation result 1720 in the storage device 102. The promotion measure implementation result 1720 includes input data (the promotion measure 1703M, the pre-implementation cooperation rate 1741M, and the post-implementation cooperation rate 1742M) in the promotion measure implementation result 1701, the addition result 1500, and the reference feature value 1011. Through the above steps, the measure implementation processing (step S606) ends.

Returning to FIG. 6, the decision making support device 100 receives an improvement effect confirmed input through a user (for example, a leader of the target group) operating the input device 103 (step S607). When the improvement effect confirmed input is received (step S607: Yes), the processing returns to step S601. On the other hand, when the improvement effect confirmed input is not received and the processing ends (step S607: No), the series of processing ends.

When the group type 403 of the target group is known, the decision making support device 100 may start execution from the recommended action analysis processing (step S604).

As described above, according to Embodiment 1, it is possible to automatically present the cooperation rate 1613 among members of a small group when the promotion measure 1612 is implemented in the target group. Accordingly, when the promotion measure 1612 is implemented in the target group, a possibility that a selected recommended action indicated by the recommended action selection result 804 is successful increases, and characteristics of the target group can be improved.

[Embodiment 2]

Next, Embodiment 2 will be described. In Embodiment 2, a decision making support system that manages a plurality of the decision making support devices 100 according to Embodiment 1 will be described. In Embodiment 2, since differences from Embodiment 1 will be mainly described, parts common to those in Embodiment 1 are denoted by the same reference numerals, and the description thereof will be omitted.

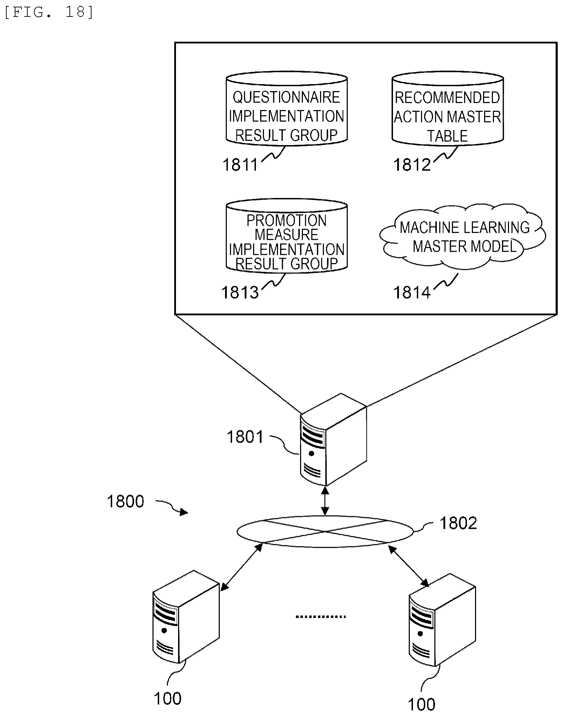

FIG. 18 is a diagram showing an example of the information processing system. The information processing system includes a management device 1801 and a plurality of the decision making support devices 100. The management device 1801 and a plurality of the decision making support device 100 are communicably connected via a network 1802 such as the Internet, a local area network (LAN), or a wide area network (WAN). The management device 1801 is, for example, a decision making support device implemented by the hardware structure shown in FIG. 1. The management device 1801 may be any one of the plurality of decision making support devices 100.

The management device 1801 includes a questionnaire implementation result group 1811, a recommended action master table 1812, a promotion measure implementation result group 1813, and a machine learning master model 1814. Specifically, for example, the questionnaire implementation result group 1811, the recommended action master table 1812, the promotion measure implementation result group 1813, and the machine learning master model 1814 are stored in the storage device 102 of the management device 1801, and may be stored in another computer that can be accessed by the management device 1801 via the network 1802 using the communication IF 105 of the management device 1801.

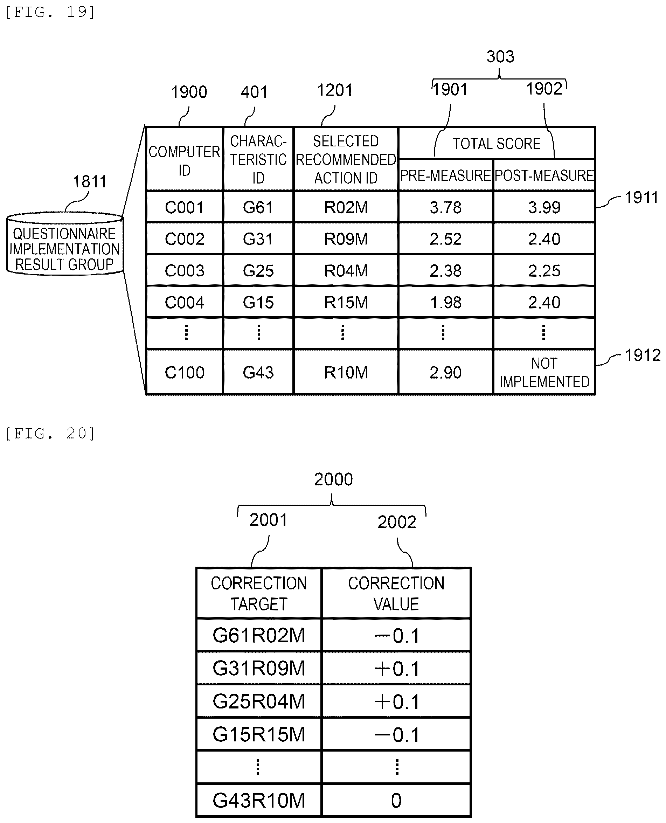

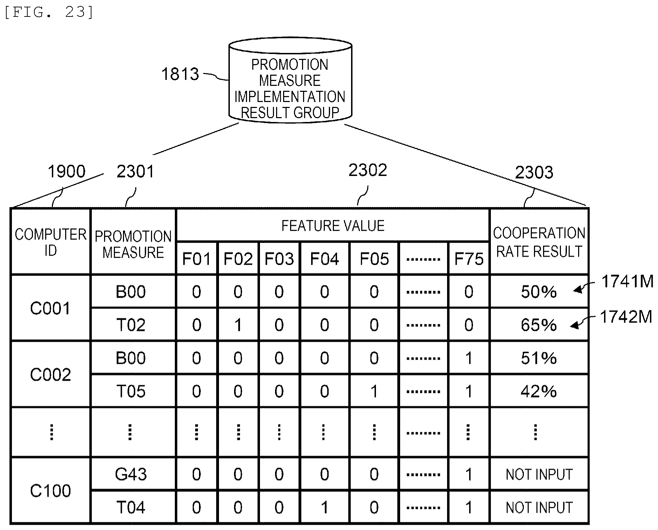

The questionnaire implementation result group 1811 will be described later with reference to FIG. 19. The promotion measure implementation result group 1813 will be described later with reference to FIG. 23. The recommended action master table 1812 is a table having the same structure as the recommended action table 500. The machine learning master model 1814 is a model having the same structure as the machine learning model 1013.

The recommended action master table 1812 and the machine learning master model 1814 are updated by the management device 1801. The management device 1801 distributes recommended action master data in the latest updated recommended action master table 1812 and training parameters constituting the latest updated machine learning master model 1814 to each decision making support device 100. The decision making support device 100 receives, from the management device 1801, the recommended action master data in the recommended action master table 1812 and the training parameters constituting the machine learning master model 1814, and updates the recommended action table 500 and the machine learning model 1013 serving as slave information.

<Update of Recommended Action Table 500>

Next, an example of updating the recommended action table 500 will be described.

FIG. 19 is a diagram showing an example of the questionnaire implementation result group 1811 shown in FIG. 18. The questionnaire implementation result group 1811 includes a questionnaire implementation result in each of the plurality of decision making support devices 100. The questionnaire implementation result group 1811 includes fields of a computer ID 1900, the characteristic ID 401, the selected recommended action ID 1201, and the total score 303.

The computer ID 1811 is identification information for uniquely specifying a computer, that is, the decision making support device 100. Therefore, one entry indicates one questionnaire implementation result. For example, an entry 1911 is a questionnaire implementation result obtained by the decision making support device 100 of a computer #C001.

The total score 303 includes sub-fields of a total score of pre-measure 1901 and a total score of post-measure 1902. The pre-measure 1901 is the total score 303 for a questionnaire implemented in a target group before the promotion measure 1612 corresponding to the selected recommended action ID 1201 is implemented for the target group in the decision making support device 100 specified by the computer ID 1811 (see FIG. 3).

The post-measure 1902 is the total score 303 for a questionnaire (the same questionnaire as that of the pre-measure 1901) implemented in the target group after the promotion measure 1612 corresponding to the selected recommended action ID 1201 is implemented in the target group in the decision making support device 100 specified by the computer ID 1811 (see FIG. 3).

For example, the entry 1911 indicates that, in the decision making support device 100 of the computer #C001, the total score 303 of answers to the questionnaire in the pre-measure 1901 when the selected recommended action #R02M corresponds to the target group having the characteristic #G61 is "3.78", and the total score 303 of answers to the same questionnaire in the post-measure 1902 is "3.99". When the questionnaire is not implemented in the post-measure 1902, "not implemented" is stored in the post-measure 1902 as shown in the entry 1912.

FIG. 20 is a diagram showing an example of update data 2000. The update data 2000 is data generated by the management device 1801 with reference to the questionnaire implementation result group 1811. The update data 2000 includes fields of a correction target 2001 and a correction value 2002. The correction target 2001 is a combination of the characteristic ID 401 and the selected recommended action ID 1201 to be corrected with the correction value 2002. For example, in the case of the entry 1911 in FIG. 19, since the characteristic ID 401 is "G61" and the selected recommended action ID 1201 is "R02M", the characteristic ID 401 and the selected recommended action ID 1201 are combined to be "G61R02M".

The group characteristic rank 503 of the selected recommended action ID 1201 (the recommended action ID 501) in the group type 403 of the target group specified by the characteristic ID 401 is specified as the correction target 2001. For example, in the case of the entry 1911 in FIG. 19, the characteristic ID 401 is "G61" and the selected recommended action ID 1201 is "R02M". Therefore, "1" of the group characteristic rank 503 is specified in FIG. 5.

The correction value 2002 is data for correcting the group characteristic rank 503 specified by the correction target 2001. The correction value 2002 includes a positive or negative sign and a step width. The sign is determined by a comparison result between the total score 303 in the pre-measure 1901 and the total score 303 in the post-measure 1902. When the total score 303 in the pre-measure 1901 < the total score 303 in the post-measure 1902, the sign is determined to be negative. When the total score 303 in the pre-measure 1901 > the total score 303 in the post-measure 1902, the sign is determined to be positive. When the total score 303 in the pre-measure 1901 = the total score 303 in the post-measure 1902, or when the post-measure 1902 indicates not implemented, the step width is determined to be 0.

The step width is a preset value, and is "0.1" in the example of FIG. 20. The step width is not limited to "0.1". A value of the step width may be different for each correction target 2001.

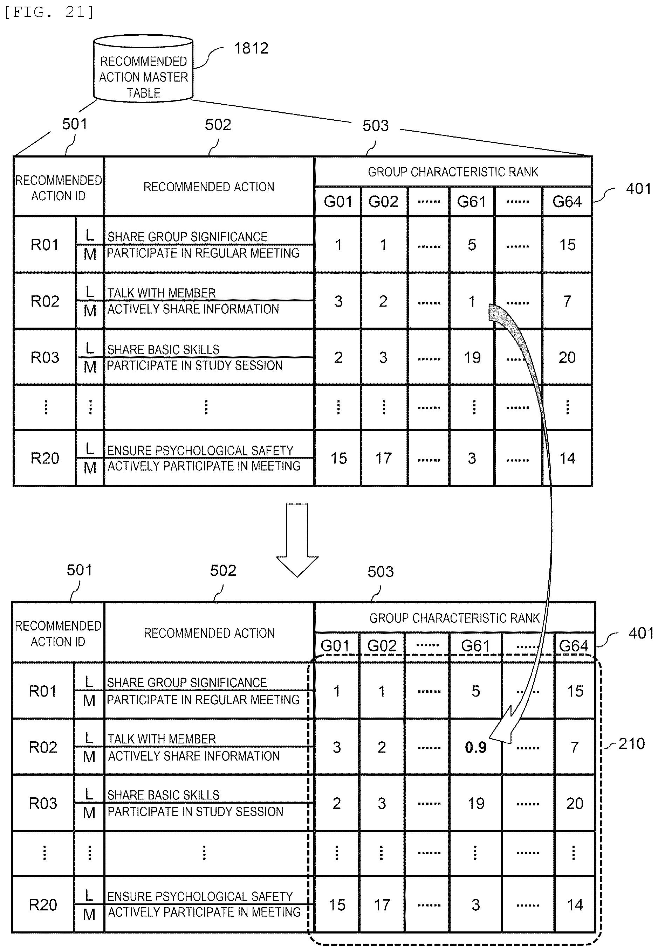

FIG. 21 is a diagram showing an example of the recommended action master table 1812. For example, when the correction target 2001 is "G61R02M", the correction value 2002 is "-0.1". In the recommended action master table 1812, a value "1" is specified in the group characteristic rank 503 in which a column of the characteristic ID 401 of "G61" intersects with a row of the recommended action ID 501 of "R02M".

The management device 1801 calculates "0.9" by adding "-0.1", which is the correction value 2002 when the correction target 2001 is "G61R02M", to the specified value "1". "0.9" is a value of the specified group characteristic rank 503 in the recommended action master table 1812. The management device 1801 executes such processing for each questionnaire implementation result.

<Update Sequence of Recommended Action Table 500 >

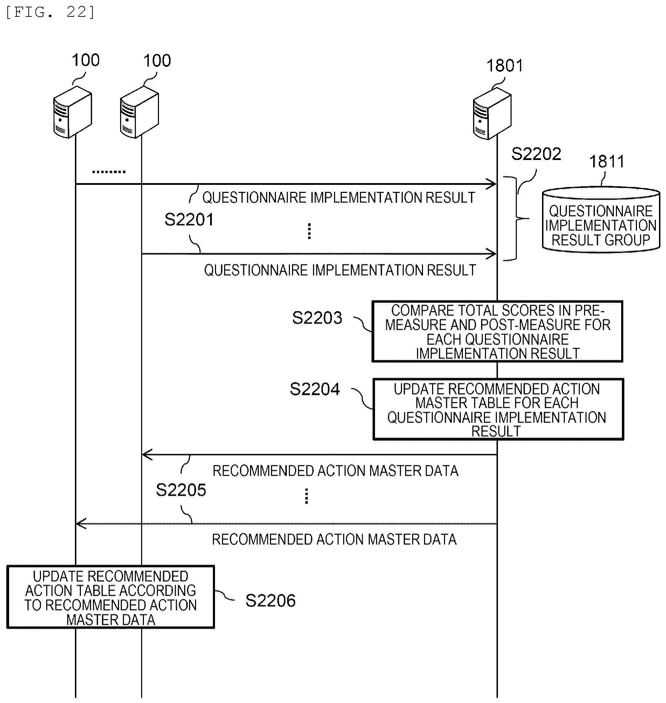

FIG. 22 is a diagram showing an update sequence of the recommended action table 500. The plurality of decision making support devices 100 transmit the questionnaire implementation results to the management device 1801 (step S2201). The management device 1801 receives the questionnaire implementation results from the plurality of decision making support devices 100 and stores the questionnaire implementation results as the questionnaire implementation result group 1811 (step S2202).

The management device 1801 calculates the correction value 2002 by comparing the total score 303 in the pre-measure 1901 and the total score 303 in the post-measure 1902 for each questionnaire implementation result, and creates the update data 2000 (step S2203).

The management device 1801 corrects the rank of the correction target 2001 for each questionnaire implementation result based on the update data 2000 in step S2203 as shown in FIG. 21, and updates the recommended action master table 1812 (step S2204).

The management device 1801 distributes recommended action master data in the recommended action master table 1812 after the update in step S2204 to each of the decision making support devices 100 (step S2205). The recommended action master data is matrix data of the group characteristic rank 503 in the recommended action master table 1812 after the update in step S2204. Note that the recommended action master data to be distributed may be values of the correction target 2001 and the updated group characteristic rank 503.

Each decision making support device 100 updates the recommended action table 500 with the received recommended action master data (step S2206). Accordingly, each decision making support device 100 matches the recommended action table 500 with the recommended action master table 1812. Through the above steps, the update of the recommended action table 500 ends.

<Update of Machine Learning Model 1013 >

Next, an example of updating the machine learning model 1013 will be described.

FIG. 23 is a diagram showing an example of the promotion measure implementation result group 1813 shown in FIG. 18. The promotion measure implementation result group 1813 includes fields of the computer ID 1900, a promotion measure ID 2301, a feature value 2302, and a cooperation rate result 2303. Entries in two rows having the same value of the computer ID 1900 correspond to the promotion measure implementation result 1720 from the decision making support device 100 specified by the computer ID 1900.

The promotion measure ID 2301 includes the reference ID 1300 (no measure) and the measure ID 1400 of the promotion measure 1703M.

The feature value 2302 includes values of feature values F01 to F75 of the reference ID 1300 (no measure) and values of feature values F01 to F75 of the promotion measure 1703M. The values of the feature values F01 to F75 of the reference ID 1300 (no measure) are, for example, the reference feature value 1011. The values of the feature values F01 to F75 of the promotion measure 1703M are, for example, the addition result 1500.

The cooperation rate result 2303 includes the pre-implementation cooperation rate 1741M of the reference ID 1300 (no measure) and the post-implementation cooperation rate 1742M of the promotion measure 1703M. In the cooperation rate result 2303, "not input" indicates a state in which the implementation result 1704M is not input in the decision making support device 100 specified by the computer ID 1900.

Entries in two rows having the same value of the computer ID 1900 are the promotion measure implementation result 1720, and are information on training of the machine learning master model 1814 in the machine learning model 1013 (hereinafter, training information), that is, information used for re-training of the machine learning master model 1814.

<Update Sequence of Machine Learning Model 1013>

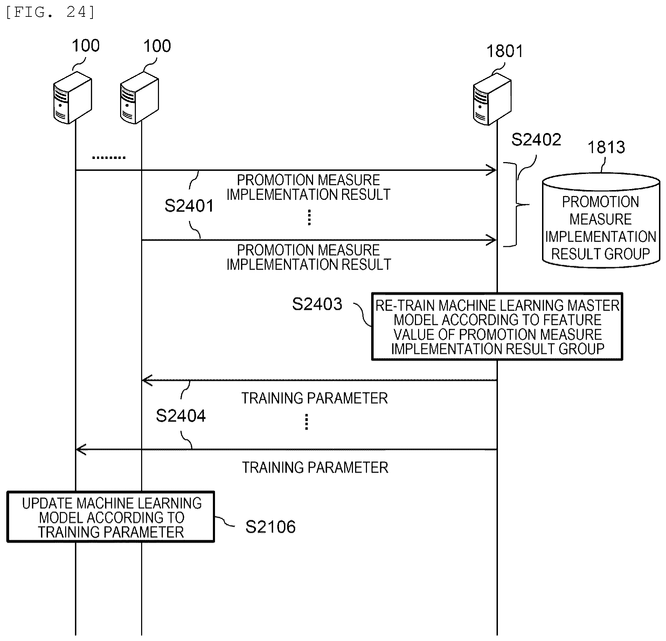

FIG. 24 is a diagram showing an update sequence of the machine learning model 1013. Each of the plurality of decision making support devices 100 transmits the training information to the management device 1801 (step S2401). When each decision making support device 100 is re-trained using the promotion measure implementation result 1720, each decision making support device 100 may transmit a training parameter of the machine learning model 1013 as training information.

The management device 1801 receives the promotion measure implementation results 1720 from the plurality of decision making support devices 100 and stores the promotion measure implementation results 1720 as the promotion measure implementation result group 1813 (step S2402).

The management device 1801 re-trains the machine learning master model 1814 using the feature values F01 to F75 of the promotion measure implementation result group 1813 (step S2403). Specifically, for example, the management device 1801 uses the feature value 2302 as training data, uses the cooperation rate result 2303 as ground truth data, and inputs the training data to the machine learning master model 1814 to predict a cooperation rate. The management device 1801 re-trains the machine learning master model 1814 by error back propagation using a value of a loss function based on a difference between the predicted cooperation rate and the ground truth data. The management device 1801 does not use the promotion measure implementation result 1720 of which the cooperation rate result 2303 is "not input" for re-training.

Further, the management device 1801 may execute re-training (step S2403) when a predetermined number or more of the promotion measure implementation results 1720 of which the cooperation rate result 2303 is not "not input" are accumulated. Accordingly, it is not necessary to wait for re-training (step S2403) until the "not input" state of the cooperation rate result 2303 is resolved, and an update interval of the machine learning model 1013 can be shortened.

When the training information is a training parameter of the machine learning model 1013, the management device 1801 may average training parameters from the decision making support devices 100 by federated learning and update the machine learning master model 1814 using the averaged training parameters.

Then, the management device 1801 distributes the training parameters of the updated machine learning master model 1814 to the decision making support devices 100 (step S2404).

Each decision making support device 100 updates the machine learning model 1013 according to the training parameters from the management device 1801 (step S2106). Accordingly, in each decision making support device 100, the machine learning model 1013 matches the machine learning master model 1814. Through the above steps, the update of the machine learning model 1013 ends.

As described above, according to Embodiment 2, since the management device 1801 integrally manages the plurality of decision making support devices 100, it is possible to prevent a variation in a possibility indicating that a selected recommended action indicated by the recommended action selection result 804 is successful among the plurality of decision making support devices 100, and to improve characteristics of the target group in each of the plurality of decision making support devices 100.

The invention is not limited to the embodiments described above and includes various modifications and equivalent configurations within the scope of the appended claims. For example, the embodiments described above are described in detail for easy understanding of the invention, and the invention is not necessarily limited to those including all the configurations described above. A part of a configuration of one embodiment may be replaced with a configuration of another embodiment. A configuration of one embodiment may also be added to a configuration of another embodiment. Another configuration may be added to a part of a configuration of each embodiment, and a part of a configuration of each embodiment may be deleted or replaced with another configuration.

A part or all of the above configurations, functions, processing units, processing methods, and the like may be implemented by hardware by, for example, designing with an integrated circuit, or may be implemented by software by, for example, a processor interpreting and executing a program for implementing each function.

Information in a program, a table, a file, or the like for implementing each function can be stored in a storage device such as a memory, a hard disk, or a solid state drive (SSD), or in a recording medium such as an integrated circuit (IC) card, an SD card, or a digital versatile disc (DVD).

Control lines and information lines considered to be necessary for descriptions are shown, and not all control lines and information lines necessary for implementation are shown. Actually, almost all components may be considered to be connected to one another.

**Claims**

1. A decision making support device comprising:

   a processor configured to execute a program; and
   a storage device configured to store the program, wherein
   the processor is configured to execute

   acquisition processing of acquiring a feature value related to a measure to be implemented by a group, a feature value related to an action of the group, and a feature value related to the group,
   first prediction processing of inputting the feature value related to the measure, the feature value related to the action, and the feature value related to the group, which are acquired by the acquisition processing, to a machine learning model that predicts whether members of the group cooperate with one another to take the action, and outputting a first prediction result of predicting whether the members of the group cooperate with one another to take the action when the feature value related to the action and the feature value related to the group are input according to whether the measure is implemented, and
   output processing of outputting the first prediction result obtained by the first prediction processing.

2. The decision making support device according to claim 1, wherein

   the processor is configured to execute second prediction processing of inputting the feature value related to the action and the feature value related to the group to the machine learning model and outputting a second prediction result of predicting whether the members of the group cooperate with one another to take the action, and
   in the output processing, the processor is configured to output the second prediction result obtained by the second prediction processing.

3. The decision making support device according to claim 1, wherein

   in the acquisition processing, the processor is configured to receive selection of a specific action from one or more recommended actions and acquire a feature value related to the specific action of the group, and

in the first prediction processing, the processor is configured to input the feature value related to the measure, the feature value related to the specific action, and the feature value related to the group to the machine learning model, and output the first prediction result of predicting whether the members of the group cooperate with one another to take the specific action.

4. The decision making support device according to claim 1, wherein

the processor is configured to execute recommended action analysis processing of specifying the one or more recommended actions based on a characteristic of the group, and

in the acquisition processing, the processor is configured to receive selection of the specific action from the one or more recommended actions specified by the recommended action analysis processing, and acquire a feature value related to the specific action of the group.

5. The decision making support device according to claim 4, wherein

the processor is configured to execute group characteristic analysis processing of analyzing the characteristic of the group based on an answer to a question conducted for each of the members, and

in the recommended action analysis processing, the processor is configured to specify the one or more recommended actions based on the characteristic of the group analyzed in the group characteristic analysis processing.

6. The decision making support device according to claim 1, wherein
the processor is configured to execute training processing of training the machine learning model based on the first prediction result and input information indicating a result of the action through cooperation among the members when the measure is implemented.

7. A decision making support device communicable with a plurality of computers, the decision making support device comprising:

a processor configured to execute a program; and

a storage device configured to store the program, wherein

the decision making support device holds master information in which a rank is set for a recommended action for a group for each characteristic of the group,

each of the plurality of computers holds slave information in which a rank is set for a recommended action for the group for each characteristic of the group, and

the processor is configured to execute

reception processing of receiving, from each of the plurality of computers, an implementation result including a specific characteristic of the group, a specific recommended action for the group, a first score related to the group based on a first answer to a question conducted to each member of the group before a measure to be implemented by the group is implemented, and a second score related to the group based on a second answer to the question conducted to each member after the measure is implemented,

calculation processing of calculating a correction value for a rank of the specific recommended action for the group according to the specific characteristic of the group based on the first score and the second score received by the reception processing,

correction processing of correcting the rank of the specific recommended action based on the correction value calculated by the calculation processing, and

transmission processing of transmitting a correction result obtained by the correction processing to the plurality of computers.

8. A decision making support device communicable with a plurality of computers, the decision making support device comprising:

a processor configured to execute a program; and

a storage device configured to store the program, wherein

the decision making support device holds master information in which a rank is set for a recommended action for a group for each characteristic of the group,

each of the plurality of computers holds a machine learning master model that predicts whether members of the group cooperate with one another to take an action of the group when a feature value related to the action and a feature value related to the group are input according to whether a measure to be implemented by the group is implemented,

each of the plurality of computers holds a machine learning slave model that predicts the members of the group cooperate with one another to take the action when the feature value related to the action and the feature value related to the group are input according to whether the measure is implemented, and

the processor is configured to execute

reception processing of receiving, from each of the plurality of computers, information related to training of the machine learning master model in the machine learning slave model,

training processing of training the machine learning master model based on the information related to training received from each of the plurality of computers by the reception processing, and

transmission processing of transmitting, to the plurality of computers, a training parameter of the machine learning master model trained by the training processing.

9. The decision making support device according to claim 8, wherein

the information related to training includes the feature value related to the measure, the feature value related to the action, the feature value related to the group, and first input information indicating a result of performing the action through cooperation among the members when the measure is implemented, and

in the training processing, the processor is configured to train the machine learning master model based on the first input information and a first prediction result that is output as a result of inputting the feature value related to the measure, the feature value related to the action, and the feature value related to the group, which are received from each of the plurality of computers by the reception processing, to the machine learning master model.

10. The decision making support device according to claim 9, wherein

the information related to training includes second input information indicating a result of performing the action through cooperation among the members when the measure is not implemented, and

in the training processing, the processor is configured to train the machine learning master model based on the second input information and a second prediction result that is output as a result of inputting the feature value related to the action and the feature value related to the group into the machine learning master model.

11. The decision making support device according to claim 8, wherein

the information related to training is a training parameter of the machine learning slave model, and

in the training processing, the processor is configured to train the machine learning master model based on the training parameter received from each of the plurality of computers by the reception processing.

12. The decision making support device according to claim 8, wherein
the processor is configured to execute the training processing when the processor receives the information related to training from a predetermined number or more of computers among the plurality of computers.

13. A decision making support method executed by a decision making support device including a processor that executes a program and a storage device that stores the program, the decision making support method comprising:

executed by the processor,

acquisition processing of acquiring a feature value related to a measure to be implemented by a group, a feature value related to an action of the group, and a feature value related to the group;

first prediction processing of inputting the feature value related to the measure, the feature value related to the action, and the feature value related to the group, which are acquired by the acquisition processing, to a machine learning model that predicts whether members of the group cooperate with one another to take the action, and outputting a first prediction result of predicting whether the members of the group cooperate with one another to take the action when the feature value related to the action and the feature value related to the group are input according to whether the measure is implemented; and

output processing of outputting the first prediction result obtained by the first prediction processing.

**14.** A decision making support program for causing a processor to execute:

acquisition processing of acquiring a feature value related to a measure to be implemented by a group, a feature value related to an action of the group, and a feature value related to the group;

first prediction processing of inputting the feature value related to the measure, the feature value related to the action, and the feature value related to the group, which are acquired by the acquisition processing, to a machine learning model that predicts whether members of the group cooperate with one another to take the action, and outputting a first prediction result of predicting whether the members of the group cooperate with one another to take the action when the feature value related to the action and the feature value related to the group are input according to whether the measure is implemented; and

output processing of outputting the first prediction result obtained by the first prediction processing.

[FIG. 1]

100

101

PROCESSOR

102

STORAGE
DEVICE

106

103

INPUT
DEVICE

104

OUTPUT
DEVICE

105

COMMUNICATION
IF

[FIG. 2]

| | 201 | 202 | 203 | 204 | |
|---|---|---|---|---|---|
| MEMBER ID | AGE | GENDER | NATIONALITY | ... |
| 001 | 45 | MALE | JAPAN | ... |
| 002 | 31 | FEMALE | JAPAN | ... |
| 003 | 27 | MALE | USA | ... |
| ... | ... | ... | ... | ... |
| 035 | 24 | FEMALE | JAPAN | ... |
| ... | ... | ... | ... | ... |

200

MEMBER DB

[FIG. 3]

ANSWER DB 300

| MEMBER ID | A-RELATED QUESTION | | | | B-RELATED QUESTION | | | | C-RELATED QUESTION | | | | ······ | F-RELATED QUESTION | | | |
|---|---|---|---|---|---|---|---|---|---|---|---|---|---|---|---|---|---|
| | (1) | (2) | (3) | (4) | (1) | (2) | (3) | (4) | (1) | (2) | (3) | (4) | ······ | (1) | (2) | (3) | (4) |
| 001 | 5 | 4 | 3 | 4 | 4 | 3 | 2 | 4 | 4 | 4 | 3 | 3 | ······ | 1 | 1 | 1 | 2 |
| 002 | 4 | 3 | 5 | 5 | 3 | 2 | 3 | 3 | 5 | 4 | 3 | 3 | ······ | 2 | 3 | 1 | 2 |
| 003 | 4 | 4 | 5 | 4 | 3 | 4 | 5 | 3 | 4 | 4 | 4 | 5 | ······ | 1 | 1 | 2 | 1 |
| ⋮ | ⋮ | ⋮ | ⋮ | ⋮ | ⋮ | ⋮ | ⋮ | ⋮ | ⋮ | ⋮ | ⋮ | ⋮ | ······ | ⋮ | ⋮ | ⋮ | ⋮ |
| 035 | 4 | 5 | 3 | 2 | 3 | 3 | 4 | 3 | 5 | 5 | 4 | 4 | ······ | 3 | 1 | 1 | 1 |
| QUESTION SCORE | 4.40 | | | | 3.23 | | | | 4.05 | | | | ······ | 1.55 | | | |
| TOTAL SCORE | 3.78 | | | | | | | | | | | | | | | | |

201  301A  301B  301C  301F

303  302

[FIG. 4]

GROUP CHARACTERISTIC TABLE — 400

401 402 403 404

| CHARAC-TERISTIC ID | REFERENCE VALUE COMPARISON RESULT | | | | | | GROUP TYPE | SPECIALTY AND PROBLEM |
|---|---|---|---|---|---|---|---|---|
| | A | B | C | D | E | F | | |
| G01 | — | — | — | — | — | — | LACK OF SELF-CONSCIOUSNESS | SPECIALTY: ALL CHARAC-TERISTICS ARE POOR... PROBLEM: |
| G02 | — | — | — | — | — | + | NO INTEREST | SPECIALTY: ALL EXCEPT SENSE OF BELONGING... PROBLEM: |
| ⋮ | ⋮ | ⋮ | ⋮ | ⋮ | ⋮ | ⋮ | ⋮ | ⋮ |
| G61 | + | + | + | + | — | — | STAR | SPECIALTY: INDIVIDUAL AUTONOMY IS ... PROBLEM: SENSE OF BELONGING IS LOW... |
| G62 | + | + | + | + | — | + | EXPERT | SPECIALTY: INDIVIDUAL AUTONOMY IS ... PROBLEM: |
| ⋮ | ⋮ | ⋮ | ⋮ | ⋮ | ⋮ | ⋮ | ⋮ | ⋮ |
| G64 | + | + | + | + | + | + | IDEAL | SPECIALTY: ALL CHARAC-TERISTICS ARE EXCELLENT ... PROBLEM: |

[FIG. 5]

| RECOMMENDED ACTION ID | | RECOMMENDED ACTION | GROUP CHARACTERISTIC RANK | | | | | |
|---|---|---|---|---|---|---|---|---|
| | | | G01 | G02 | ...... | G61 | ...... | G64 |
| R01 | L | SHARE GROUP SIGNIFICANCE | 1 | 1 | ...... | 5 | ...... | 15 |
| | M | PARTICIPATE IN REGULAR MEETING | | | | | | |
| R02 | L | TALK WITH MEMBER | 3 | 2 | ...... | 1 | ...... | 7 |
| | M | ACTIVELY SHARE INFORMATION | | | | | | |
| R03 | L | SHARE BASIC SKILLS | 2 | 3 | ...... | 19 | ...... | 20 |
| | M | PARTICIPATE IN STUDY SESSION | | | | | | |
| ⋮ | ⋮ | ⋮ | ⋮ | ⋮ | ...... | ⋮ | ...... | ⋮ |
| R20 | L | ENSURE PSYCHOLOGICAL SAFETY | 15 | 17 | ...... | 3 | ...... | 14 |
| | M | ACTIVELY PARTICIPATE IN MEETING | | | | | | |

500 RECOMMENDED ACTION TABLE

501 502 503 401

[FIG. 6]

```
                    ┌─────────────────┐
                    │      START      │
                    └────────┬────────┘
                             │
   ┌─────────────────────────┤
   │                         ▼
   │            ┌───────────────────────────┐
   │            │ ANSWER DATA ACQUISITION   │──  S601
   │            │       PROCESSING          │
   │            └─────────────┬─────────────┘
   │                          ▼
   │            ┌───────────────────────────┐
   │            │   GROUP CHARACTERISTIC    │──  S602
   │            │    ANALYSIS PROCESSING    │
   │            └─────────────┬─────────────┘
   │                          ▼
   │                  ╱───────────────╲
   │        S603    ╱   THERE IS       ╲   No
   │               ╱  CHARACTERISTIC    ╲───────┐
   │               ╲   IMPROVEMENT      ╱       │
   │                ╲ DISCUSSION INPUT ╱         │
   │                  ╲───────┬───────╱          │
   │                          │ Yes              │
   │                          ▼                  │
   │            ┌───────────────────────────┐    │
   │            │   RECOMMENDED ACTION      │── S604
   │            │    ANALYSIS PROCESSING    │    │
   │            └─────────────┬─────────────┘    │
   │                          ▼                  │
   │            ┌───────────────────────────┐    │
   │            │    PROMOTION MEASURE      │── S605
   │            │    ANALYSIS PROCESSING    │    │
   │            └─────────────┬─────────────┘    │
   │                          ▼                  │
   │            ┌───────────────────────────┐    │
   │            │ MEASURE IMPLEMENTATION    │── S606
   │            │       PROCESSING          │    │
   │            └─────────────┬─────────────┘    │
   │                          ▼                  │
   │    Yes           ╱───────────────╲          │
   └─────────────────╱   THERE IS      ╲── S607  │
                     ╲ IMPROVEMENT EFFECT╱        │
                      ╲ CONFIRMED INPUT ╱         │
                        ╲───────┬──────╱          │
                             No │                 │
                                ▼◄────────────────┘
                    ┌─────────────────┐
                    │       END       │
                    └─────────────────┘
```

[FIG. 7]

700

GROUP CHARACTERISTIC ANALYSIS RESULT

701

A (AUTONOMY)    F (SENSE OF BELONGING)

712

B
(ADAPTABILITY)                                    E
                                              (COOPERA-
                                               TIVENESS)

711

C (CREATIVITY)    D (EQUALITY)

702

STAR GROUP TYPE
(G61)

SPECIALTY:
 HIGH INDIVIDUAL AUTONOMY
 LEADING TO CREATIVE OUTCOME

PROBLEM:
 LIKELY TO QUIT FROM GROUP
 DUE TO LOW SENSE OF BELONGING

703    ANALYSIS          END
                                    704

S604    RECOMMENDED
        ACTION ANALYSIS
        PROCESSING

[FIG. 8]

400
GROUP CHARACTERIST ISTIC TABLE

| 401 CHARACTERISTIC ID | 403 GROUP TYPE | 404 SPECIALTY AND PROBLEM |
|---|---|---|
| G61 | STAR | SPECIALTY: INDIVIDUAL AUTONOMY IS ... PROBLEM: SENSE OF BELONGING IS LOW... |

800

**RECOMMENDED ACTION ANALYSIS PROCESSING** 801

PROBLEM: (G61) LIKELY TO QUIT DUE TO LOW SENSE OF BELONGING

RECOMMENDED ACTION:

821 LEADER SIDE

(R02)  TALK WITH MEMBER
(R07)  PLAN VARIOUS EVENTS
(R20)  ENSURE PSYCHOLOGICAL SAFETY
(R13)  SET GOAL AND PLAN PROJECT

822 MEMBER SIDE

☑ ACTIVELY SHARE INFORMATION
☐ PARTICIPATE IN VARIOUS EVENTS
☐ ACTIVELY PARTICIPATE IN MEETING
☐ CONSULT PROGRESS REPORT
823

802

803 SELECT

500
RECOM- MENDED ACTION TABLE

| 501 RECOMMENDED ACTION ID | | 502 RECOMMENDED ACTION |
|---|---|---|
| R02 | L | TALK WITH MEMBER |
| | M | ACTIVELY SHARE INFORMATION |
| R07 | L | PLAN VARIOUS EVENTS |
| | M | PARTICIPATE IN VARIOUS EVENTS |
| R20 | L | ENSURE PSYCHOLOGICAL SAFETY |
| | M | ACTIVELY PARTICIPATE IN MEETING |
| R13 | L | SET GOAL AND PLAN PROJECT |
| | M | CONSULT PROGRESS REPORT |

RECOMMENDED ACTION SELECTION RESULT
804

[FIG. 9]

804

RECOMMENDED
ACTION
SELECTION
RESULT

900

INPUT GROUP DATA
[SELECTED RECOMMENDED ACTION: ACTIVELY SHARE INFORMATION (R02M)]

| NUMBER OF GROUP MEMBERS | 30〜50 | ACTIVITY PLACE | ONLINE |
|---|---|---|---|
| AVERAGE AGE | 30.1 | ACTIVITY YEARS | 5 YEARS |
| FEMALE RATIO | 0.42 | ORGANIZATION STRUCTURE | FLAT TYPE |
| EDUCATION HISTORY | SCIENCE AND ENGINEERING HUB | INTIMACY | NORMAL |
| NATIONALITY | ONLY JAPANESE | COOPERATIVENESS | INDIVIDUALISM |

901

902  ANALYSIS

910  GROUP DATA

[FIG. 10]

PROMOTION MEASURE
ANALYSIS PROCESSING — S605

| GROUP DATA | → | DATA CONVERSION | → | REFERENCE FEATURE VALUE |
|---|---|---|---|---|

S1002

910   S1001

RECOMMENDED ACTION SELECTION RESULT

804

MEASURE FEATURE VALUE TABLE

1011

1012

(+)

COOPERATION RATE PREDICTION

RESULT TOTALIZATION

S1003

S1004

MACHINE LEARNING MODEL

1013

[FIG. 11]

1100

1101   1102   1103

| CONVERSION TARGET GROUP DATA ITEM | FEATURE VALUE (GROUP) | CONVERSION ALGORITHM |
|---|---|---|
| NUMBER OF GROUP MEMBERS | F51 | F51 = log(CENTER OF SETTING RANGE) ÷ log(1000) |
| AVERAGE AGE | F52 | F52 = (INPUT VALUE) ÷ 100 |
| FEMALE RATIO | F53 | F53 = (INPUT VALUE) |
| ⋮ | ⋮ | ⋮ |
| COOPERATIVENESS | F72∼75 | F72 = 1 (INDIVIDUALISM), F73 = 1 (COMPETITIONISM) F74 = 1 (COOPERATIVENESS), F75 = 1 (UNKNOWN) |

[FIG. 12]

1200

1201                 1202

| SELECTED RECOMMENDED ACTION ID | FEATURE VALUE (RECOMMENDED ACTION) | | | | | | | | |
|---|---|---|---|---|---|---|---|---|---|
| | F26 | F27 | F28 | F29 | F30 | F31 | F32 | ⋯⋯ | F50 |
| R01M | 0 | 1 | 0 | 0.5 | 1 | 0 | 0.20 | ⋯⋯ | 1 |
| R02M | 0 | 1 | 0.25 | 0.25 | 0 | 1 | 0.20 | ⋯⋯ | 1 |
| R03M | 1 | 0 | 0 | 0.4 | 0 | 1 | 0.25 | ⋯⋯ | 1 |
| ⋮ | ⋮ | ⋮ | ⋮ | ⋮ | ⋮ | ⋮ | ⋮ | ⋯⋯ | ⋮ |
| R20M | — | — | 1 | 0.5 | 0 | 1 | 0.30 | ⋯⋯ | 0.5 |

[FIG. 13]

REFERENCE FEATURE VALUE   1011

1300     1301               1202        1102

| REFERENCE ID | FEATURE VALUE (MEASURE) | | | | FEATURE VALUE (RECOMMENDED ACTION) | | | | FEATURE VALUE (GROUP) | | |
|---|---|---|---|---|---|---|---|---|---|---|---|
| | F01 | F02 | F03 | ⋯⋯ F25 | F26 | F27 | F28 | ⋯⋯ F50 | F51 | ⋯⋯ | F75 |
| B00 | 0 | | | | 0 | 1 | 0.25 | ⋯⋯ 1 | 0.53 | ⋯⋯ | 0 |

[FIG. 14]

MEASURE
FEATURE
VALUE TABLE — 1012

| MEA-SURE ID | FEATURE VALUE (MEASURE) | | | | | FEATURE VALUE (RECOMMENDED ACTION) | | | FEATURE VALUE (GROUP) | | |
|---|---|---|---|---|---|---|---|---|---|---|---|
| | F01 | F02 | F03 | ······ | F25 | F26 | ······ | F50 | F51 | ······ | F75 |
| T01 | 1 | 0 | 0 | ······ | 0 | | | | | | |
| T02 | 0 | 1 | 0 | ······ | 0 | | | | | | |
| T03 | 0 | 0 | 1 | ······ | 0 | | | 0 | | | |
| ⋮ | ⋮ | ⋮ | ⋮ | ······ | ⋮ | | | | | | |
| T25 | 0 | 0 | 0 | ······ | 1 | | | | | | |

1400        1401        1402        1403

[FIG. 15]

1011

| REFER-ENCE ID | FEATURE VALUE (MEASURE) | | | | FEATURE VALUE (RECOMMENDED ACTION) | | | | FEATURE VALUE (GROUP) | | |
|---|---|---|---|---|---|---|---|---|---|---|---|---|
| | F01 | F02 | F03 | ...... | F25 | F26 | F27 | F28 | ...... | F50 | F51 | ...... | F75 |
| B00 | 0 | | | | | 0 | 1 | 0.25 | ...... | 1 | 0.53 | ...... | 0 |

1300  1301  1202  1102

S1002 ➕  1012

| MEA-SURE ID | FEATURE VALUE (MEASURE) | | | | | FEATURE VALUE (RECOMMENDED ACTION) | | | FEATURE VALUE (GROUP) | | |
|---|---|---|---|---|---|---|---|---|---|---|---|
| | F01 | F02 | F03 | ...... | F25 | F26 | ...... | F50 | F51 | ...... | F75 |
| T01 | 1 | 0 | 0 | ...... | 0 | 0 | | | | | |
| T02 | 0 | 1 | 0 | ...... | 0 | | | | | | |
| T03 | 0 | 0 | 1 | ...... | 0 | | | | | | |
| ⋮ | ⋮ | ⋮ | ⋮ | ...... | ⋮ | | | | | | |
| T25 | 0 | 0 | 0 | ...... | 1 | | | | | | |

1400  1401  1402  1403

‖ 1500

| MEA-SURE ID | FEATURE VALUE (MEASURE) | | | | | FEATURE VALUE (RECOMMENDED ACTION) | | | FEATURE VALUE (GROUP) | | |
|---|---|---|---|---|---|---|---|---|---|---|---|
| | F01 | F02 | F03 | ...... | F25 | F26 | ...... | F50 | F51 | ...... | F75 |
| T01 | 1 | 0 | 0 | ...... | 0 | 0 | ...... | 1 | 0.53 | ...... | 0 |
| T02 | 0 | 1 | 0 | ...... | 0 | 0 | ...... | 1 | 0.53 | ...... | 0 |
| T03 | 0 | 0 | 1 | ...... | 0 | 0 | ...... | 1 | 0.53 | ...... | 0 |
| ⋮ | ⋮ | ⋮ | ⋮ | ...... | ⋮ | 0 | ...... | 1 | 0.53 | ...... | 0 |
| T25 | 0 | 0 | 0 | ...... | 1 | 0 | ...... | 1 | 0.53 | ...... | 0 |

1400  1401  1202  1102

[FIG. 16]

ADDITION RESULT 1500

REFERENCE FEATURE VALUE 1011

MACHINE LEARNING MODEL 1013

FIRST PREDICTION RESULT 1601

SECOND PREDICTION RESULT 1602

DISPLAY

1600

PROMOTION MEASURE ANALYSIS RESULT 804
[SELECTED RECOMMENDED ACTION: ACTIVELY SHARE INFORMATION (R02M)]

1610
1611  1612  1613  1614

| RANK | PROMOTION MEASURE | COOPERATION RATE | IMPROVEMENT |
|------|-------------------|------------------|-------------|
| — | NO MEASURE (B00) | 54.8% | — |
| 1 | DISCUSS MEANING OF RECOMMENDED ACTION (T02) | 70.3% | 15.5%↑ |
| 2 | ALLOCATE SUFFICIENT TIME FOR Q&A AND COUNTERARGUMENTS (T03) | 69.0% | 14.2%↑ |
| 3 | LEADERS EXEMPLIFY BY TAKING INITIATIVE (T08) | 65.1% | 10.3%↑ |
| 4 | HAVE TEAM MEMBER DECLARE QUANTITATIVE TARGET (T07) | 63.2% | 8.4%↑ |
| ⋮ | ⋮ | ⋮ | ⋮ |
| 25 | MUTUALLY REMIND MEMBERS WHO DO NOT PERFORM RECOMMENDED ACTION (T19) | 51.3% | 3.5%↓ |

[FIG. 17]

1700

INPUT OF PROMOTION MEASURE IMPLEMENTATION RESULT (G61) ← 401    1701

| 1702 | LEADER SIDE (L) | MEMBER SIDE (M) |
|---|---|---|
| RECOMMENDED ACTION | TALK WITH MEMBER (R02L) | ACTIVELY SHARE INFORMATION (R02M) |
| PROMOTION MEASURE | — | MEANING OF RECOMMENDED ACTION ... (T02) |

1703

| | PRE-IMPLEMENTATION COOPERATION RATE (%) | POST-IMPLEMENTATION COOPERATION RATE (%) |
|---|---|---|
| IMPLEMENTATION RESULT | IMPLEMENTED | 50 | 65 |

1704          1741M   1742M

1710 CONFIRM

1720 PROMOTION MEASURE ANALYSIS RESULT

[FIG. 18]

[FIG. 19]

303

1900　401　1201　1901　1902

1811

QUESTIONNAIRE IMPLEMENTATION RESULT GROUP

| COMPUTER ID | CHARAC-TERISTIC ID | SELECTED RECOMMENDED ACTION ID | TOTAL SCORE | |
|---|---|---|---|---|
| | | | PRE-MEASURE | POST-MEASURE |
| C001 | G61 | R02M | 3.78 | 3.99 |
| C002 | G31 | R09M | 2.52 | 2.40 |
| C003 | G25 | R04M | 2.38 | 2.25 |
| C004 | G15 | R15M | 1.98 | 2.40 |
| ⋮ | ⋮ | ⋮ | ⋮ | ⋮ |
| C100 | G43 | R10M | 2.90 | NOT IMPLEMENTED |

1911

1912

[FIG. 20]

2000

2001　2002

| CORRECTION TARGET | CORRECTION VALUE |
|---|---|
| G61R02M | −0.1 |
| G31R09M | ＋0.1 |
| G25R04M | ＋0.1 |
| G15R15M | −0.1 |
| ⋮ | ⋮ |
| G43R10M | 0 |

[FIG. 21]

RECOMMENDED ACTION MASTER TABLE — 1812

**401**

| RECOMMENDED ACTION ID (501) | | RECOMMENDED ACTION (502) | GROUP CHARACTERISTIC RANK (503) | | | | | |
|---|---|---|---|---|---|---|---|---|
| | | | G01 | G02 | ⸺ | G61 | ⸺ | G64 |
| R01 | L | SHARE GROUP SIGNIFICANCE | 1 | 1 | ⸺ | 5 | ⸺ | 15 |
| | M | PARTICIPATE IN REGULAR MEETING | | | | | | |
| R02 | L | TALK WITH MEMBER | 3 | 2 | ⸺ | 1 | ⸺ | 7 |
| | M | ACTIVELY SHARE INFORMATION | | | | | | |
| R03 | L | SHARE BASIC SKILLS | 2 | 3 | ⸺ | 19 | ⸺ | 20 |
| | M | PARTICIPATE IN STUDY SESSION | | | | | | |
| ⋮ | ⋮ | ⋮ | ⋮ | ⋮ | ⸺ | ⋮ | ⸺ | ⋮ |
| R20 | L | ENSURE PSYCHOLOGICAL SAFETY | 15 | 17 | ⸺ | 3 | ⸺ | 14 |
| | M | ACTIVELY PARTICIPATE IN MEETING | | | | | | |

⬇

**401**

| RECOMMENDED ACTION ID (501) | | RECOMMENDED ACTION (502) | GROUP CHARACTERISTIC RANK (503) | | | | | |
|---|---|---|---|---|---|---|---|---|
| | | | G01 | G02 | ⸺ | G61 | ⸺ | G64 |
| R01 | L | SHARE GROUP SIGNIFICANCE | 1 | 1 | ⸺ | 5 | ⸺ | 15 |
| | M | PARTICIPATE IN REGULAR MEETING | | | | | | |
| R02 | L | TALK WITH MEMBER | 3 | 2 | ⸺ | **0.9** | ⸺ | 7 |
| | M | ACTIVELY SHARE INFORMATION | | | | | | |
| R03 | L | SHARE BASIC SKILLS | 2 | 3 | ⸺ | 19 | ⸺ | 20 |
| | M | PARTICIPATE IN STUDY SESSION | | | | | | |
| ⋮ | ⋮ | ⋮ | ⋮ | ⋮ | ⸺ | ⋮ | ⸺ | ⋮ |
| R20 | L | ENSURE PSYCHOLOGICAL SAFETY | 15 | 17 | ⸺ | 3 | ⸺ | 14 |
| | M | ACTIVELY PARTICIPATE IN MEETING | | | | | | |

210

[FIG. 22]

100    100                                    1801

S2202    1811

QUESTIONNAIRE IMPLEMENTATION RESULT

S2201

QUESTIONNAIRE
IMPLEMENTATION
RESULT GROUP

QUESTIONNAIRE IMPLEMENTATION RESULT

S2203 — COMPARE TOTAL SCORES IN PRE-MEASURE AND POST-MEASURE FOR EACH QUESTIONNAIRE IMPLEMENTATION RESULT

S2204 — UPDATE RECOMMENDED ACTION MASTER TABLE FOR EACH QUESTIONNAIRE IMPLEMENTATION RESULT

RECOMMENDED ACTION MASTER DATA

S2205

RECOMMENDED ACTION MASTER DATA

UPDATE RECOMMENDED ACTION TABLE ACCORDING TO RECOMMENDED ACTION MASTER DATA    ~ S2206

[FIG. 23]

PROMOTION MEASURE IMPLEMENTATION RESULT GROUP — 1813

| COMPUTER ID | PROMOTION MEASURE | FEATURE VALUE | | | | | | | COOPERATION RATE RESULT |
|---|---|---|---|---|---|---|---|---|---|
| | | F01 | F02 | F03 | F04 | F05 | ........ | F75 | |
| C001 | B00 | 0 | 0 | 0 | 0 | 0 | ........ | 0 | 50% |
| | T02 | 0 | 1 | 0 | 0 | 0 | ........ | 0 | 65% |
| C002 | B00 | 0 | 0 | 0 | 0 | 0 | ........ | 1 | 51% |
| | T05 | 0 | 0 | 0 | 0 | 1 | ........ | 1 | 42% |
| ⋮ | ⋮ | ⋮ | ⋮ | ⋮ | ⋮ | ⋮ | ........ | ⋮ | ⋮ |
| C100 | G43 | 0 | 0 | 0 | 0 | 0 | ........ | 1 | NOT INPUT |
| | T04 | 0 | 0 | 0 | 1 | 0 | ........ | 1 | NOT INPUT |

1900  2301  2302  2303

1741M
1742M

[FIG. 24]

100     100                        1801

S2402   1813

PROMOTION MEASURE
IMPLEMENTATION RESULT

S2401

PROMOTION
MEASURE
IMPLEMENTATION
RESULT GROUP

PROMOTION MEASURE
IMPLEMENTATION RESULT

S2403 — RE-TRAIN MACHINE LEARNING MASTER
MODEL ACCORDING TO FEATURE
VALUE OF PROMOTION MEASURE
IMPLEMENTATION RESULT GROUP

TRAINING PARAMETER

S2404

TRAINING PARAMETER

UPDATE MACHINE LEARNING
MODEL ACCORDING TO
TRAINING PARAMETER   — S2106

## INTERNATIONAL SEARCH REPORT

<table>
<tr><td colspan="2">International application No.<br>**PCT/JP2023/016170**</td></tr>
</table>

### A. CLASSIFICATION OF SUBJECT MATTER

***G06Q 10/06***(2023.01)i
FI: G06Q10/06

According to International Patent Classification (IPC) or to both national classification and IPC

### B. FIELDS SEARCHED

Minimum documentation searched (classification system followed by classification symbols)

G06Q10/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2010/052845 A1 (HITACHI, LTD.) 14 May 2010 (2010-05-14)<br>entire text, all drawings | 1-14 |
| A | JP 2016-139323 A (NEC SOLUTION INNOVATORS LTD.) 04 August 2016 (2016-08-04)<br>entire text, all drawings | 1-14 |
| A | JP 2015-103179 A (NIPPON TELEGRAPH AND TELEPHONE CORPORATION) 04 June 2015 (2015-06-04)<br>entire text, all drawings | 1-14 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>**03 July 2023** | Date of mailing of the international search report<br>**11 July 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**
Information on patent family members

| International application No. |
| --- |
| **PCT/JP2023/016170** |

| Patent document cited in search report | | | Publication date (day/month/year) | Patent family member(s) | | | Publication date (day/month/year) |
| --- | --- | --- | --- | --- | --- | --- | --- |
| WO | 2010/052845 | A1 | 14 May 2010 | US 2011/0295655 A1 entire text, all drawings CN 102203813 A | | | |
| JP | 2016-139323 | A | 04 August 2016 | (Family: none) | | | |
| JP | 2015-103179 | A | 04 June 2015 | (Family: none) | | | |

Form PCT/ISA/210 (patent family annex) (January 2015)

**EP 4 703 986 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016139323 A